# EUROPEAN PATENT APPLICATION

(11) **EP 4 797 165 A1**
(43) Date of publication of application: **26.08.2026**
(21) Application number: 24899464.2
(22) Date of filing: 15.10.2024
(51) Int. Cl.: G06N 5/04

(54) **INFERENCE METHOD, SYSTEM AND APPARATUS**

(30) Priority: 07.12.2023 CN 202311683927
(71) Applicant: HUAWEI TECHNOLOGIES CO., LTD., Shenzhen 518129 (CN)
(72) Inventor: ZHAO, Nengwen, Shenzhen, Guangdong 518129 (CN); LI, Yexing, Shenzhen, Guangdong 518129 (CN)
(74) Representative: Körber, Martin Hans
(86) International application number: PCT/CN2024/124844
(87) International publication number: WO 2025/118820

(57) **Abstract**

Embodiments of this application provide an inference method, a system, and an apparatus, which can be used by a cognitive inference service producer to generate an inference solution having confidence and/or a risk value, to feed back an inference solution to a cognitive inference service consumer based on the confidence and/or the risk value of the inference solution, so that the cognitive inference service consumer can obtain a needed inference solution. The method includes: A cognitive inference service producer receives an inference request, where the inference request is for requesting to provide an inference solution for fulfilling a user intent target; obtains, based on the inference request, a first inference solution set including at least one inference solution and at least one of confidence or a risk value corresponding to each inference solution, where the confidence indicates a probability of accomplishing an inference task by using the inference solution, and the risk value indicates a probability of changing user experience when the inference task is accomplished by using the inference solution; and feeds back the at least one solution in the first inference solution set.

## Description

This application claims priority to Chinese Patent Application No. 202311683927.5, filed with the China National Intellectual Property Administration on December 7, 2023 and entitled "INFERENCE METHOD, SYSTEM, AND APPARATUS", which is incorporated herein by reference in its entirety.

### TECHNICAL FIELD

This application relates to the communication field, and in particular, to an inference method, a system, and an apparatus.

### BACKGROUND

In a communication system, for example, in a scenario of communication network optimization or maintenance, a cognitive inference service consumer may request an inference solution from a task inference service producer, for example, a solution for achieving an intent of communication network optimization or maintenance or the like. The task inference service producer generates the inference solution and then delivers the inference solution to the cognitive inference service consumer. However, due to a dependency relationship between network system topology complexity and fault propagation, there may be a plurality of root cause inference solutions. Therefore, how to enable the cognitive inference service consumer to obtain a needed inference solution becomes an urgent problem to be resolved.

### SUMMARY

Embodiments of this application provide an inference method, a system, and an apparatus, which may be used by a cognitive inference service producer to generate an inference solution having confidence and/or a risk value, so as to feed back an inference solution to a cognitive inference service consumer based on the confidence and/or the risk value of the inference solution, so that the cognitive inference service consumer can obtain a needed inference solution.

In view of this, according to a first aspect, this application provides an inference method, including:
receiving an inference request, where the inference request is for requesting to provide a solution for accomplishing an inference task, and the inference task includes a task for fulfilling a user intent target; then obtaining a first inference solution set based on the inference request, where the first inference solution set includes at least one inference solution and at least one of confidence or a risk value corresponding to each inference solution, each inference solution is for accomplishing the inference task, the confidence indicates a probability of accomplishing the inference task by using the inference solution, and the risk value indicates a probability of changing user experience when the inference task is accomplished by using the inference solution; and sending a second inference solution set, where the second inference solution set includes at least one solution in the first inference solution set.

In this implementation of this application, when the inference solution is generated, the confidence and/or the risk value of each inference solution are/is further generated. Therefore, when the inference solution is fed back, the confidence and/or the risk value of each inference solution may also be fed back, or the inference solution is fed back after selection is performed based on the confidence of each inference solution. In this way, a consumer can select a needed solution more accurately based on the received inference solution.

For ease of understanding, in the following, a sender of the inference request is referred to as a consumer, and a receiver of the inference request is referred to as a producer. Details are not described below.

In a possible implementation, the sending the second inference solution set may include: using the first inference solution set as the second inference solution set; and sending the second inference solution set. Therefore, in this implementation of this application, the confidence and/or the risk value corresponding to each inference solution may also be fed back. In this way, the consumer can accurately select a needed inference solution based on received data and the confidence and/or the risk value of each inference solution.

In a possible implementation, the inference request further carries a confidence indication and/or a risk indication, the confidence indication is for requesting to provide confidence corresponding to an inference solution, and the risk indication is for requesting to provide a risk value corresponding to an inference solution. Therefore, the consumer may include the confidence indication and/or the risk indication in the inference request, so that the producer can feed back the confidence and/or the risk value of each inference solution based on the inference request. In this way, the consumer can accurately select a needed inference solution based on received data and the confidence and/or the risk value of each inference solution.

In a possible implementation, the sending the second inference solution set may include: selecting, from the first inference solution set, a solution whose confidence is greater than a confidence threshold and/or a solution whose risk value is greater than a risk threshold, to obtain the second inference solution set; and sending the second inference solution set.

Therefore, in this implementation of this application, the producer may feed back the inference solution to the consumer only after performing selection on the generated inference solutions, so that a solution that satisfies a requirement of the consumer can be directly fed back. In this way, the consumer can obtain a needed inference solution more accurately.

In a possible implementation, the inference request further carries the confidence threshold and/or the risk threshold. Therefore, in this implementation of this application, the consumer may determine the confidence threshold and/or the risk threshold, so that the producer can directly feed back, to the consumer, an inference solution that satisfies a requirement of the consumer.

In a possible implementation, the sending the second inference solution set may further include: selecting, from the first inference solution set, one inference solution as a solution in the second inference solution set based on at least one of the confidence or the risk value corresponding to each inference solution; and sending the second inference solution set. In this implementation of this application, the producer may directly feed back an inference solution to the consumer. Therefore, the consumer can accurately obtain a needed inference solution without a need of performing selection.

In a possible implementation, the selecting, from the first inference solution set, one inference solution based on at least one of the confidence or the risk value corresponding to each inference solution may include: selecting, from the first inference solution set, one inference solution that satisfies a selecting condition, where the selecting condition includes at least one of the following: an inference solution having highest confidence, an inference solution having a lowest risk value, or an inference solution having a highest fusion value obtained by fusing confidence and a risk value. In this implementation of this application, an inference solution having highest confidence, an inference solution having a lowest risk value, or an inference solution obtained by fusing confidence and a risk value may be selected, to adapt to a plurality of scenarios.

In a possible implementation, the inference request further carries a policy indication, and the policy indication indicates at least one item in the selecting condition. Therefore, in this implementation of this application, the consumer may select the selecting condition, so that the producer can directly select an inference solution that satisfies a requirement of the consumer.

In a possible implementation, the second inference solution set further includes at least one of confidence or a risk value corresponding to an inference solution. Therefore, the producer may further feed back the confidence and/or the risk value to the consumer, so that the consumer can learn of the confidence and/or the risk value corresponding to each inference solution. When a plurality of inference solutions are fed back, the consumer may further select a needed solution based on the confidence and/or the risk value of each inference solution.

In a possible implementation, the obtaining the first inference solution set based on the inference request may include: obtaining monitoring data and a knowledge base that correspond to the inference task, where the monitoring data includes data of a device related to the inference task, and knowledge in the knowledge base includes a rule for accomplishing the inference task; and obtaining the first inference solution set based on the monitoring data and the knowledge. Therefore, in this implementation of this application, inference may be performed based on locally stored knowledge and collected real-time monitoring data, to obtain an accurate inference solution based on a preset rule.

In a possible implementation, the method may further include: obtaining an execution result, where the execution result is obtained by executing an inference solution included in the second inference solution set; and updating the knowledge based on the execution result, to obtain updated knowledge. Therefore, in this implementation of this application, the knowledge may be updated based on the execution result of the inference solution, so that the knowledge stored in the knowledge base can be more accurate, and accuracy of a subsequently generated inference solution is improved.

In a possible implementation, the inference task may specifically include at least one of a fault locating task, a fault repair task, a configuration check task, a potential risk identification task, or a solution recommendation task. The fault locating task indicates to locate a fault root cause of a device. The fault repair task indicates to repair a device on which a fault occurs. The configuration check task indicates to check a configuration of a device. The potential risk identification task indicates to obtain a probability that a fault occurs on a device. The solution recommendation task indicates to obtain at least one solution for executing a target task. Therefore, the method provided in this application may be applied to a plurality of network optimization or maintenance scenarios, and has a very strong generalization capability.

According to a second aspect, this application provides an inference method, including: firstly, sending an inference request, where the inference request is for requesting to provide a solution for accomplishing an inference task, and the inference task includes a task for fulfilling a user intent target; and then, receiving a second inference solution set, where the second inference solution set includes at least one inference solution, the second inference solution set is obtained from a first inference solution set, the first inference solution set is a set generated based on the inference request, the first inference solution set includes at least one inference solution and at least one of confidence or a risk value corresponding to each inference solution, each inference solution is for accomplishing the inference task, the confidence indicates a probability of accomplishing the inference task by using the inference solution, and the risk value indicates a probability of changing user experience when the inference task is accomplished by using the inference solution.

In this implementation of this application, when generating the inference solution, a producer further generates the confidence and/or the risk value of each inference solution. Therefore, when the inference solution is fed back, the confidence and/or the risk value of each inference solution may also be fed back, or the inference solution is fed back after selection is performed based on the confidence of each inference solution. In this way, a consumer can select a needed solution more accurately based on the received inference solution.

In addition, for effects implemented in the second aspect and any optional implementation of the second aspect, refer to the effects implemented in the first aspect or any optional implementation of the first aspect. Similarities are not described below again.

In a possible implementation, the second inference solution set further includes at least one of confidence or a risk value corresponding to each of the at least one inference solution. Therefore, in this implementation of this application, the producer may also feed back the confidence and/or the risk value corresponding to each inference solution. In this way, the consumer can accurately select a needed inference solution based on received data and the confidence and/or the risk value of each inference solution.

In a possible implementation, the inference request further carries a confidence indication and/or a risk indication, the confidence indication is for requesting to provide confidence corresponding to an inference solution, and the risk indication is for requesting to provide a risk value corresponding to an inference solution.

In a possible implementation, the confidence of the inference solution included in the second inference solution set is higher than a confidence threshold and/or the risk value of the inference solution included in the second inference solution set is higher than a risk threshold.

In a possible implementation, the inference request further carries the confidence threshold and/or the risk threshold.

In a possible implementation, the second inference solution set includes one inference solution, and the one inference solution is obtained by performing selection from the first inference solution set based on the confidence and/or the risk value.

In a possible implementation, the inference request further carries a policy indication, and the policy indication indicates to provide one inference solution.

In a possible implementation, the policy indication further indicates at least one item in a selecting condition, and the selecting condition includes at least one of the following: an inference solution having highest confidence, an inference solution having a lowest risk value, or an inference solution having a highest fusion value obtained by fusing confidence and a risk value.

In a possible implementation, the method may further include:
sending the inference solution in the second inference solution set;
receiving an execution result, where the execution result is an execution result obtained by accomplishing the inference task by using the inference solution in the second inference solution set; and
sending the execution result, where the execution result is for updating knowledge, the knowledge is for determining the second inference solution set, and the knowledge includes a rule for accomplishing the inference task.

According to a third aspect, this application provides an inference method, including:

A first device sends an inference request to a second device, where the inference request is for requesting to provide a solution for accomplishing an inference task, and the inference task includes a task for fulfilling a user intent target.

The second device obtains a first inference solution set based on the inference request, where the first inference solution set includes at least one inference solution and at least one of confidence or a risk value corresponding to each inference solution, each inference solution is for accomplishing the inference task, the confidence indicates a probability of accomplishing the inference task by using the inference solution, and the risk value indicates a probability of changing user experience when the inference task is accomplished by using the inference solution.

The second device sends a second inference solution set to the first device, where the second inference solution set includes at least one solution in the first inference solution set.

In addition, for effects implemented in the third aspect and any optional implementation of the third aspect, refer to the effects implemented in the first aspect or any optional implementation of the first aspect. Similarities are not described below again.

In a possible implementation, that the second device sends the second inference solution set to the first device includes:

The second device uses the first inference solution set as the second inference solution set.

The second device sends the second inference solution set to the first device.

In a possible implementation, the inference request further carries a confidence indication and/or a risk indication, the confidence indication is for requesting to provide confidence corresponding to an inference solution, and the risk indication is for requesting to provide a risk value corresponding to an inference solution.

In a possible implementation, that the second device sends the second inference solution set to the first device may include:

The second device selects, from the first inference solution set, a solution whose confidence is greater than a confidence threshold and/or a solution whose risk value is greater than a risk threshold, to obtain the second inference solution set.

The second device sends the second inference solution set to the first device.

In a possible implementation, the inference request further carries the confidence threshold and/or the risk threshold.

In a possible implementation, that the second device sends the second inference solution set to the first device may further include:

The second device selects, from the first inference solution set, one inference solution as a solution in the second inference solution set based on at least one of the confidence or the risk value corresponding to each inference solution.

The second device sends the second inference solution set to the first device.

In a possible implementation, that the second device selects, from the first inference solution set, one inference solution as the solution in the second inference solution set based on at least one of the confidence or the risk value corresponding to each inference solution may include:

The second device selects, from the first inference solution set, one inference solution that satisfies a selecting condition, where the selecting condition includes at least one of the following: an inference solution having highest confidence, an inference solution having a lowest risk value, or an inference solution having a highest fusion value obtained by fusing confidence and a risk value.

In a possible implementation, the inference request further carries a policy indication, and the policy indication indicates at least one item in the selecting condition.

In a possible implementation, the second inference solution set further includes at least one of confidence or a risk value corresponding to an inference solution.

In a possible implementation, that the second device obtains the first inference solution set based on the inference request includes:

The second device obtains monitoring data and a knowledge base that correspond to the inference task, where the monitoring data includes data of a device related to the inference task, and knowledge in the knowledge base includes a rule for accomplishing the inference task.

The second device obtains the first inference solution set based on the monitoring data and the knowledge.

In a possible implementation, the method may further include:

The first device sends an execution result to the second device, where the execution result is obtained by executing an inference solution included in the second inference solution set.

The second device updates the knowledge based on the execution result to obtain updated knowledge.

In a possible implementation, the inference task may include at least one of a fault locating task, a fault repair task, a configuration check task, a potential risk identification task, or a solution recommendation task. The fault locating task indicates to locate a fault root cause of a device. The fault repair task indicates to repair a device on which a fault occurs. The configuration check task indicates to check a configuration of a device. The potential risk identification task indicates to obtain a probability that a fault occurs on a device. The solution recommendation task indicates to obtain at least one solution for executing a target task.

According to a fourth aspect, this application provides an inference apparatus. The inference apparatus may be configured to perform a step that is performed by the inference apparatus and that is in any one of the first aspect and the possible implementations provided in the first aspect.

In a possible design manner, in this application, the inference apparatus may be divided into functional modules according to any one of the first aspect and the possible implementations provided in the first aspect. For example, each functional module may be obtained through division based on each corresponding function, or at least two functions may be integrated into one processing module.

For example, in this application, the inference apparatus may be divided into a transceiver module, a processing module, and the like based on functions. For descriptions of possible technical solutions performed by the functional modules obtained through division and beneficial effects, refer to the technical solutions provided in the first aspect or the corresponding possible implementations of the first aspect. Details are not described herein again.

In another possible design, the inference apparatus includes a memory and a processor, and the memory is coupled to the processor. The memory is configured to store computer instructions. The processor is configured to invoke the computer instructions, to perform the method provided in the first aspect or the corresponding possible implementations of the first aspect.

According to a fifth aspect, this application provides an inference apparatus. The inference apparatus may be configured to perform a step that is performed by the inference apparatus and that is in any one of the second aspect and the possible implementations provided in the second aspect.

In a possible design manner, in this application, the inference apparatus may be divided into functional modules according to any one of the second aspect and the possible implementations provided in the second aspect. For example, each functional module may be obtained through division based on each corresponding function, or at least two functions may be integrated into one processing module.

For example, in this application, the inference apparatus may be divided into a transceiver module, a processing module, and the like based on functions. For descriptions of possible technical solutions performed by the functional modules obtained through division and beneficial effects, refer to the technical solutions provided in the second aspect or the corresponding possible implementations of the second aspect. Details are not described herein again.

In another possible design, the inference apparatus includes a memory and a processor, and the memory is coupled to the processor. The memory is configured to store computer instructions. The processor is configured to invoke the computer instructions, to perform the method provided in the second aspect or the corresponding possible implementations of the second aspect.

According to a sixth aspect, this application provides a communication system. The communication system may also be referred to as a communication network or the like. The communication system may include a plurality of inference apparatuses. At least one inference apparatus may be configured to perform the method steps in any one of the second aspect or the optional implementations of the second aspect, and at least one remaining inference apparatus may be further configured to perform the method steps in any one of the first aspect or the optional implementations of the first aspect.

According to a seventh aspect, this application provides a computer-readable storage medium, for example, a non-transient computer-readable storage medium. A computer program (or instructions) is stored on the computer-readable storage medium. When the computer program (or the instructions) runs on a computer device, the computer device is caused to perform the method provided in the first aspect or the corresponding possible implementations of the first aspect, or perform the method provided in the second aspect or the corresponding possible implementations of the second aspect.

According to an eighth aspect, this application provides a computer program product. When the computer program product runs on a computer device, the method provided in the first aspect or the corresponding possible implementations of the first aspect is performed, or the method provided in the second aspect or the corresponding possible implementations of the second aspect is performed.

According to a ninth aspect, this application provides a chip system, including a processor. The processor is configured to invoke, from a memory, and run a computer program stored in the memory, to perform the method provided in the first aspect or the corresponding possible implementations of the first aspect, or perform the method provided in the second aspect or the corresponding possible implementations of the second aspect.

It may be understood that any system, apparatus, computer storage medium, computer program product, chip system, or the like provided above can be used in the corresponding method provided in the first aspect or the second aspect.

For specific implementation steps of the fourth aspect to the ninth aspect and the possible implementations of this application and beneficial effects brought by the possible implementations, refer to the descriptions in the possible implementations of the first aspect or the second aspect. Details are not described herein again.

### BRIEF DESCRIPTION OF DRAWINGS

FIG. 1 is a diagram of a system architecture according to this application;
FIG. 2 is a diagram of another system architecture according to this application;
FIG. 3 is a diagram of another system architecture according to this application;
FIG. 4 is a diagram of another system architecture according to this application;
FIG. 5 is a schematic flowchart of an inference method according to this application;
FIG. 6 is a schematic flowchart of another inference method according to this application;
FIG. 7 is a diagram of a structure of a data and knowledge base according to this application;
FIG. 8 is a schematic flowchart of another inference method according to this application;
FIG. 9 is a schematic flowchart of another inference method according to this application;
FIG. 10 is a schematic flowchart of another inference method according to this application;
FIG. 11 is a schematic flowchart of another inference method according to this application;
FIG. 12 is a schematic flowchart of another inference method according to this application;
FIG. 13 is a schematic flowchart of another inference method according to this application;
FIG. 14 is a diagram of a structure of an inference apparatus according to this application;
FIG. 15 is a diagram of another structure of an inference apparatus according to this application; and
FIG. 16 is a diagram of another structure of an inference apparatus according to this application.

### DESCRIPTION OF EMBODIMENTS

The following describes technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

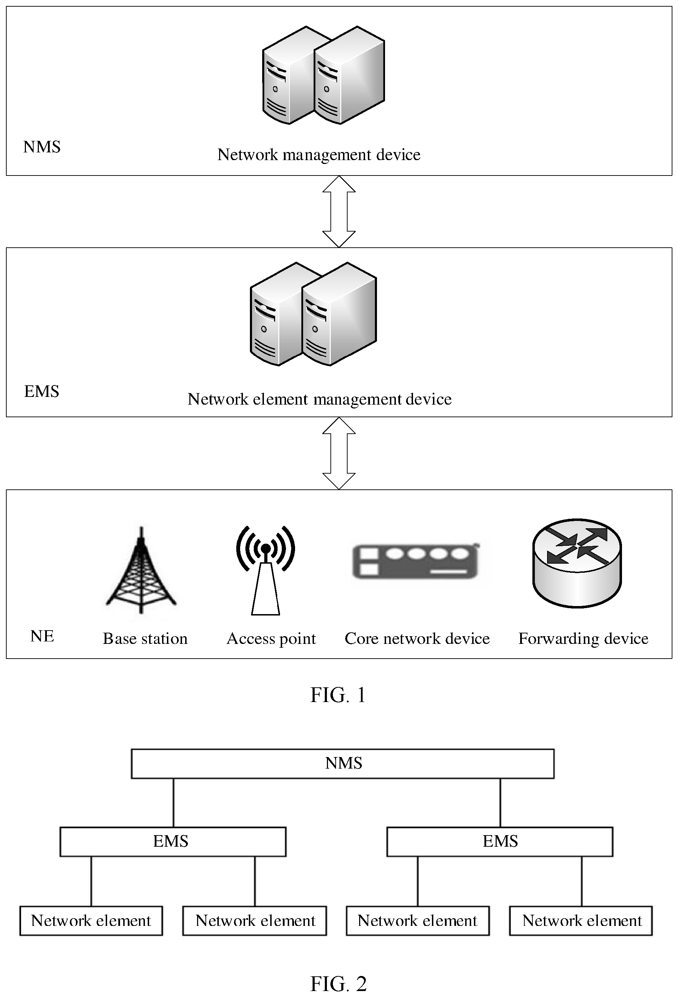

Refer to FIG. 1. A network operation and maintenance architecture based on a 5G communication technology may usually include three layers: a network element (network element, NE), a network element management system (element management system, EMS), and a network management system (network management system, NMS).

The NE is various network devices forming a network, and may include but is not limited to a base station, an access point, various core network devices, and the like. Optionally, the NE may be a physical device, or may be a virtual network function. This is not limited in this application. The EMS may not only manage the NE, but also be a provider (provider) of a network operation and maintenance management service, and may perform a specific network operation and maintenance management service operation based on a service invocation request sent by the NMS. As an invoker (invoker) for a network operation and maintenance management service, the NMS can send the service invocation request to the EMS based on a network operation and maintenance management requirement of a customer, to invoke a network operation and maintenance management service that is in the EMS and that satisfies the operation and maintenance management requirement of the customer. Both the EMS and the NMS include at least one device. A device in the EMS may be referred to as a network element management device, and a device in the NMS may be referred to as a network management device.

Network operation and maintenance includes network optimization, and the network optimization may usually include improving user experience, reducing network energy consumption, or increasing a network capacity. This is not specifically limited in embodiments of this application. A requirement and an objective of the network optimization may be set based on an actual requirement. A conventional optimization solution based on expert experience hardly achieve satisfactory results in increasingly complex communication scenarios. To provide better network experience for the customer and improve operation and maintenance efficiency, introducing artificial intelligence for network operation and maintenance has become a mainstream trend. Machine learning is a branch of the artificial intelligence. The machine learning means to parse data by using an algorithm, learning from the data, and making a decision and prediction on an event in the real world. In a network optimization scenario, a decision and prediction made by a machine learning model are optimization suggestions, that is, a change of values of parameters of a device in a network (also referred to as a parameter value or a parameter for short in embodiments of this application). A radio base station is used as an example. These parameters include a scheduling-type parameter, a resource management-type parameter, a radio frequency (radio frequency, RF) parameter, a power-type parameter, a handover-type parameter, and the like.

For example, in some solutions, a cognitive inference service consumer creates a fault locating cognitive inference service task, including information such as a fault occurrence location, a fault-related alarm, and a fault event. After accepting the task, a producer infers and generates a fault chain, and infers a fault root cause. Then, the producer returns an inference result to the consumer. Due to a dependency relationship between network system topology complexity and fault propagation, there is a high probability that there are a plurality of root cause inference results. However, in the plurality of results, a user cannot learn which root cause is an actual root cause, and consequently, overall time of root cause locating and fault repair is affected, and user experience is affected.

For another example, in some solutions, a cognitive inference service consumer creates an energy saving solution recommendation inference service request, including an energy saving effect region, an energy saving target, an experience constraint, and an effect time period. After receiving the request, a producer performs inference, and returns an inference solution. However, the cognitive inference service consumer usually receives a plurality of groups of inference solutions from a producer. It is possible that the user cannot select the most appropriate solution based on a requirement of the user, and random selection causes low problem closure efficiency.

Therefore, this application provides an inference method. When an inference solution is generated, confidence and/or a risk value of each inference solution are/is also generated, so that a user can select an adaptive solution based on a requirement.

The following describes in more detail a system architecture and a method provided in this application.

The inference method provided in this application may be applied to a plurality of communication networks, for example, a plurality of optical networks or wireless networks. For example, FIG. 2 is a diagram of another architecture of a communication system according to an embodiment of this application. The communication network includes an NMS, an EMS, a network element, and the like. In FIG. 2, the NMS indicates a device included in the NMS, and the EMS indicates a device included in the EMS. Details are not described below. For related descriptions of the NMS, the EMS, and the network element, refer to the related descriptions of FIG. 1 for understanding. The NMS is responsible for management of network operation, management, and maintenance functions. The EMS, to be specific, a network element management system, is responsible for managing one or more types of network elements. The network element is a network unit. In a radio access network, the network element means a base station or a base station controller, and includes but is not limited to one or more base stations in a global system for mobile communications (global system for mobile communications, GSM), a universal mobile telecommunications system (universal mobile telecommunications system, UMTS), long term evolution (long term evolution, LTE), and new radio (new radio, NR), a base station controller in a GSM or a UMTS, and the like. In a bearer network, the network element means one or more of an access (Access, ACC) router, a metro edge gateway (metro edge gateway, mEG), a metro aggregation edge gateway (metro aggregation edge gateway, mAEG), a metro backbone (metro backbone, mBB) router, a 5G backbone (5G Backbone, 5G BB) router, and the like. In a core network, the network element means one or more of a mobile switching center (mobile switching center, MSC), a serving general packet radio system support node (serving general packet radio system support node, SGSN), an equipment identity register (equipment identity register, EIR), a packet data network gateway for user plane (packet data network gateway for user plane, PGW-U), an access and mobility management function (access and mobility management function, AMF), a unified data management (unified data management, UDM), and the like.

Based on the foregoing described communication network, the solutions provided in embodiments of this application may be jointly performed by the NMS and the EMS, or may be jointly performed by the EMS and the network element, or may be deployed in another device.

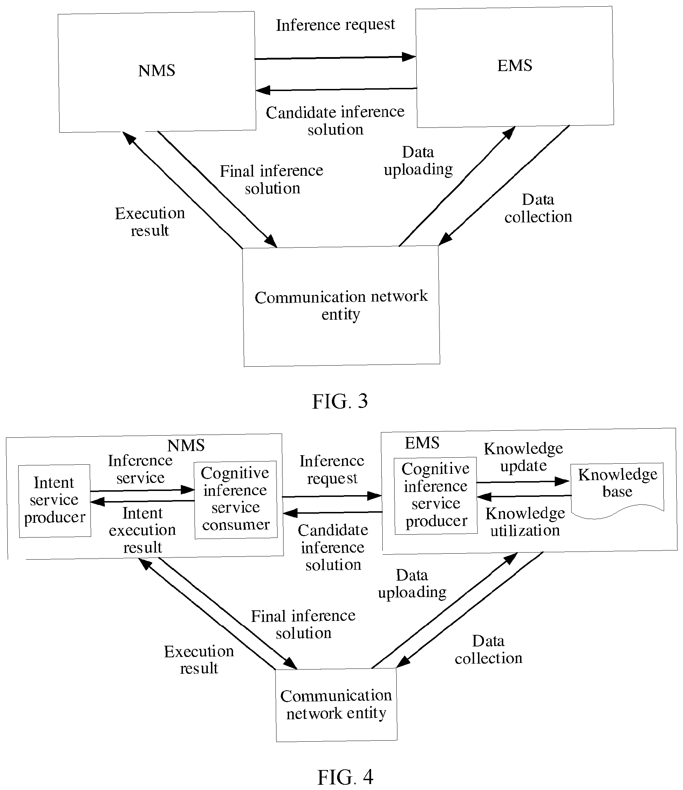

For example, FIG. 3 is a diagram of another architecture according to this application. For an EMS, an NMS, and a network element, refer to the related descriptions of FIG. 1, and details are not described herein again.

The NMS may send an inference request to the EMS. The inference request may be for requesting, from the EMS, an inference solution for performing a maintenance or optimization task of a communication network.

After receiving the inference request, the EMS delivers a candidate inference solution to the NMS. The EMS may perform data collection on the network element in advance. The network element may upload data of the network element or data of a device managed by the network element to the EMS, and the EMS may generate an inference solution based on the collected data.

After receiving the candidate inference solution, the NMS determines a final inference solution, and delivers the final inference solution to the network element via the EMS.

After receiving the final inference solution, the network element may execute the final inference solution, and feed back an execution result to the NMS.

FIG. 4 is a diagram of another architecture according to this application.

Further, an NMS may be divided into an intent service producer (for example, a user inference apparatus or a user interface) and a task inference service consumer (for example, an NMS physical server or a controller). The EMS may include a cognitive inference service producer (for example, an EMS server or a server cluster) and a knowledge base (for example, a database or a file system).

The cognitive inference service consumer may be configured to: invoke a cognitive inference service provided by the cognitive inference service producer, and send a service request to the cognitive inference service producer.

The cognitive inference service producer is configured to: provide the cognitive inference service, and returns an inference solution to the cognitive inference service consumer. The cognitive inference service producer may be deployed in the EMS. The producer further maintains the knowledge base, and has knowledge construction and knowledge update capabilities based on the knowledge base.

In this implementation of this application, the intent service producer may be configured to: generate an intent service requirement, for example, a maintenance intent or an optimization intent for a communication network, and send the intent to the cognitive inference service consumer. The cognitive inference service consumer sends the intent service requirement to the cognitive inference service producer.

The cognitive inference service producer maintains the knowledge base. Specifically, the cognitive inference service producer may update knowledge in the knowledge base by using data collected from a network element, accomplish an inference task based on the knowledge in the knowledge base, that is, generate an inference solution for the intent service requirement, and feed back the generated inference solution as a candidate inference solution to the cognitive inference service consumer.

After delivering a final inference solution to the network element, the cognitive service inference consumer receives an execution result of the network element, and feeds back the intent execution result to the intent service producer.

During network operation and maintenance, a used network operation and maintenance solution may be a solution inferred and generated in a data-driven manner, or may be a solution generated in a knowledge-driven manner, or may be a solution generated in combination with a data-driven manner and a knowledge-driven manner. As shown in Table 1, an advantage of the data-driven manner is that precise modeling is not needed, and continuous learning and evolution can be performed. However, explainability of the data-driven manner is poor, and the data-driven manner depends on high-quality large-scale data and powerful computing power of a device. An advantage of the knowledge-driven manner is strong explainability and high execution efficiency. However, costs of knowledge acquisition are usually high, it is difficult to perform continuous learning and evolution, and a knowledge mechanism is unclear for large-scale complex issues.

Therefore, based on the foregoing analysis, in this application, the knowledge-driven manner and the data-driven manner may be combined to form a new technical route (that is, cognitive inference) of knowledge and data fusion by using respective advantages. In a service scenario of an autonomous driving network, knowledge is mainly used as a carrier of expert experience for expression of some expert experience (such as fault propagation knowledge and configuration constraint knowledge) in operation and maintenance. Data mainly reflects a status of an existing network. Typical application of cognitive inference of knowledge and data fusion in the ADN includes fault locating (such as hardware faults in a communication system), fault repair (such as switchover, restart, rollback, and parameter adjustment), configuration check, and potential risk identification (such as which devices may be faulty), solution recommendation (such as energy saving solution recommendation), and the like.

**Table 1**

| Type | Advantage | Disadvantage |
|---|---|---|
| Data-driven | No need of precise modeling | Poor explainability |
| | Continuous learning and evolution | Depend on high-quality and large-scale data |
| | | Depend on powerful computing power |
| Knowledge-driven | Strong explainability | High costs of knowledge acquisition |
| | High execution efficiency | Difficult to perform continuous learning and evolution |
| | | Unclear knowledge mechanism for large-scale complex issues |

The machine learning model mentioned in this application may include an artificial intelligence model such as a neural network. Performance of most neural networks depends on a large amount of training data. A network optimization scenario is used as an example for description. An actual network scenario is complex and dynamically changes. Many factors affect network performance. In addition to a parameter of a network device, a surrounding geographical environment (such as terrain and surrounding buildings), user distribution and behavior, and even climate affect the network performance. As a result, the machine learning model faces huge state space and decision space, and requires a large amount of data to be used as training data for learning. Alternatively, it may be understood as that because there are many factors affecting the network performance, in an iterative training process, the machine learning model also needs to learn a large quantity of knowledge. To be specific, the machine learning model needs to obtain a large quantity of relationships between parameter changes and performance changes (or network status changes) as training data, to learn a relationship between a network configuration parameter and a network performance change from the training data. It should be noted that the model in this application includes a neural network model, and a specific type of the model is not limited in this application. For example, the model in this application may be a convolutional neural network model, a cyclic neural network model, or a deep residual network model. Details are not described below again.

The following describes a method procedure provided in this application with reference to the foregoing system architecture.

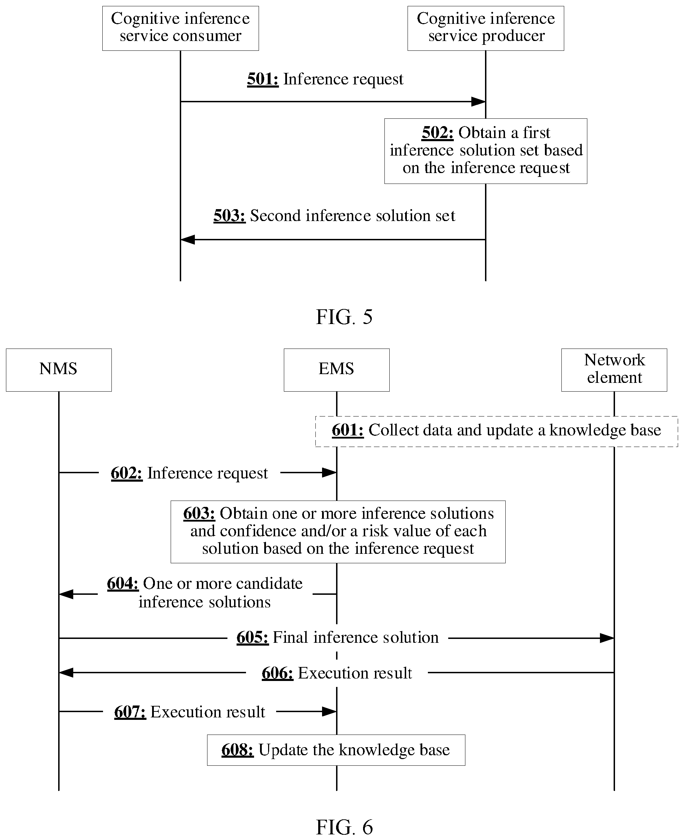

FIG. 5 is a schematic flowchart of an inference method according to this application. Details are provided below.

501: An NMS sends an inference request to an EMS.

The inference request is for requesting to provide an inference solution for accomplishing an inference task (which may be also referred to as an inference intent, a cognitive inference service request, or the like). The inference task may include a task of fulfilling a user intent target. The inference task may specifically include a task or an intent of managing a communication network, for example, a network optimization intent or a network maintenance intent.

The inference request may be specifically from the NMS or another management device that manages the communication network. For example, after obtaining an intent that a user needs to perform communication network management, the management device may generate the inference request and send the inference request to the EMS.

Optionally, the inference task may include but is not limited to at least one of one or more of the following: a fault locating task, a fault repair task, a configuration check task, a potential risk identification task, or a solution recommendation task. The fault locating task indicates to locate a fault root cause of a device. The fault repair task indicates to repair a device on which a fault occurs. The configuration check task indicates to check a configuration of a device. The potential risk identification task indicates to obtain a probability that a fault occurs on a device. The solution recommendation task indicates to obtain at least one solution for executing a target task.

502: The EMS obtains a first inference solution set based on the inference request.

After receiving the inference request, the EMS may generate one or more inference solutions, which are referred to as the first inference solution set for ease of differentiation.

When generating an inference solution, the EMS may synchronously generate at least one of confidence or a risk value. The confidence may indicate a probability of accomplishing the inference task by using the inference solution. The risk value indicates a probability of changing user experience when the inference task is accomplished by using the inference solution. The user experience may be specifically reflected by using indicators such as a user service level agreement (SLA) and quality of service (Quality of Service, QoS) for the user.

Optionally, when the one or more inference solutions are generated, the inference solution may be generated in combination with a data-driven manner and/or a knowledge-driven manner. For example, monitoring data corresponding to the inference task and knowledge stored in a knowledge base may be obtained. The monitoring data may include data of the device related to the inference task, and the knowledge may include a rule for accomplishing the inference task. Then, the first inference solution set is obtained based on the monitoring data and the knowledge. Therefore, in this implementation of this application, an inference solution may be generated with reference to data actually generated by a device in the communication network and pre-learned knowledge, so that a more accurate inference solution can be obtained.

503: The EMS sends a second inference solution set to the NMS.

After generating the first inference solution set, the EMS may feed back the one or more inference solutions to the NMS as a candidate inference solution for the inference task. In other words, the second inference solution set may include the one or more inference solutions in the first inference solution set.

In this implementation of this application, when generating the inference solution, the EMS may also generate the confidence and/or the risk value corresponding to each inference solution. Therefore, when the candidate inference solution is fed back to the NMS, the confidence and/or the risk value of each inference solution may also be fed back, or a solution that satisfies a requirement of the user, for example, a solution having higher confidence and/or a solution having a lower risk value, is selected. In this way, the user can select a needed inference solution more accurately.

Therefore, when the EMS feeds back the second inference solution set to the NMS, there may be a plurality of cases. For example, the following plurality of manners may be included but not limited thereto:

### 1. Feed back all the inference solutions and the confidence and/or the risk value of each solution

After obtaining the first inference solution set, the EMS may directly use the first inference solution set as the second inference solution set, and feed back the second inference solution set to the NMS. In other words, the inference solution in the first inference solution set and the confidence and/or the risk value of each solution may be directly fed back to the NMS, and the user selects a needed inference solution based on the confidence and/or the risk value of each solution.

Correspondingly, the inference request may further include a confidence indication and/or a risk indication. The confidence indication may be for requesting to provide confidence corresponding to an inference solution, and the risk indication is for requesting to provide a risk value corresponding to an inference solution. It is clear that, when feeding back the candidate inference solution, the EMS may alternatively feed back, to the NMS by default, the confidence and/or the risk value corresponding to each inference solution.

Therefore, when selecting a final inference solution, the user may select a needed inference solution more accurately based on the confidence and/or the risk value of each inference solution, to improve compliance of the selected solution with the requirement of the user. Energy saving is used as an example. In a conservative situation, a user tends to select a solution having a low risk (even if confidence is not the highest). In a radical situation, a user tends to select a solution having high confidence (even if a risk is high). For example, deep sleep of a remote radio unit (remote radio unit, RRU) has a good energy saving effect and high confidence, but also has a high risk.

2. Feed back one or more inference solutions satisfying that confidence is higher than a confidence threshold and/or a risk value is less than a risk value threshold

After obtaining the first inference solution set, the EMS may select, from the first inference solution set, the one or more inference solutions whose confidence is greater than the confidence threshold and/or a risk value less than the risk value threshold, and feed back the one or more inference solutions to the NMS. Therefore, an inference solution that satisfies a requirement may be directly fed back to the NMS, so that the NMS can directly select an inference solution that satisfies the requirement.

Optionally, the confidence and/or the risk value of each of the one or more inference solutions may be synchronously fed back. In this way, the NMS can learn of the specific confidence and/or risk value of each inference solution, to pre-learn of an expected result of executing the inference solution. In addition, when the EMS feeds back a plurality of inference solutions, a needed inference solution may be more accurately selected based on confidence and/or a risk value of each inference solution.

Optionally, the NMS may further include the confidence threshold and/or the risk value threshold in the inference request, to indicate the EMS to provide an inference solution whose confidence is greater than the confidence threshold and/or a risk value less than the risk value threshold.

It is clear that, in some scenarios, a default confidence threshold and/or a default risk value threshold may alternatively be set by a cognitive inference service producer, and the confidence threshold and/or the risk value threshold may not need to be carried in the inference request. In this way, a data transmission amount is reduced, to reduce communication overheads.

In this implementation of this application, the EMS can directly feed back, to the NMS, an inference solution whose confidence is greater than the confidence threshold and/or a risk value less than the risk value threshold. This is equivalent to that preliminary selection is performed to provide an inference solution that satisfies the requirement of the user. Therefore, all inference solutions fed back to the user are solutions that satisfy the requirement of the user. In this way, the user obtains an inference solution with higher availability.

### 3. Feed back one inference solution that satisfies a requirement specified by the user

In this implementation of this application, to further reduce a selection decision that needs to be made by the user, one inference solution that satisfies the requirement specified by the user may be directly fed back based on the requirement of the user. In this way, the user does not need to perform selection, and communication overheads can be reduced.

After obtaining the first inference solution set, the EMS may select, from the first inference solution set, one inference solution that satisfies a selecting condition, and feed back the inference solution to the NMS. Specifically, one inference solution may be selected based on the confidence and/or the risk value of each inference solution, and the inference solution is used as a solution in the second inference solution set, and is fed back to the NMS. Therefore, the user can use the received inference solution as a final inference solution without a need of performing selection from the received inference solution.

The selecting condition may specifically include but is not limited to at least one of the following: an inference solution having highest confidence, an inference solution having a lowest risk value, or an inference solution having a highest fusion value obtained by fusing confidence and a risk value.

For example, the EMS may feed back one inference solution having higher confidence, or feed back one inference solution having a lower risk value, or feed back one solution that satisfies the requirement with reference to confidence and a risk value, for example, one solution ranking highest in solutions whose confidence and risk value both rank in the top N, or one inference solution having a highest value obtained through fusion calculation on the confidence and the risk value.

Optionally, the NMS may include a policy indication in the inference request, and the policy indication may indicate the selecting condition, so that the EMS may select, based on the policy indication, one of the generated one or more inference solutions, and feed back the solution to the NMS.

It is clear that the EMS may select, based on a preset selecting condition, one of the generated one or more inference solutions, and feed back the solution to the NMS. This may be specifically determined based on an actual application scenario, and is not limited in this application.

Therefore, in this implementation of this application, one inference solution may be directly selected and fed back to the NMS. In this way, the user can directly obtain the inference solution that satisfies the requirement, and the user can directly determine the final inference solution without a need of performing selection.

The foregoing briefly describes the method procedure provided in this application. The following describes the method procedure provided in this application in more detail with reference to the foregoing method procedure and application scenarios.

In addition, after receiving one or more candidate inference solutions, the NMS may further continue to deliver the final inference solution to a network element. After an execution result of the final inference solution is obtained, the data and the knowledge base are updated, so that accuracy of next inference can be improved subsequently with reference to the actual feedback of the execution result of the inference solution.

FIG. 6 is a schematic flowchart of another inference method according to this application. Details are provided below.

601: An EMS collects data from a network element, and updates data and a knowledge base.

The EMS may collect, from the network element, information related to various scenarios, for example, data generated or collected by each device. After the data is collected, the data and the knowledge base can be updated.

In this implementation of this application, when performing inference to generate an inference solution, the EMS may generate the inference solution in combination with a data-driven manner and a knowledge-driven manner. Correspondingly, in a data collection phase, the data and the knowledge base may be updated by using the collected data, to perform a subsequent inference step by using the data and the knowledge base.

Specifically, during the data collection, data generated during running of each device may be collected, or information about each connected device may be collected, or information about an environment in which each device is located may be collected. For example, fault alarm information of the device, power consumption information of the device, configuration information of the device, or access information of the device may be collected.

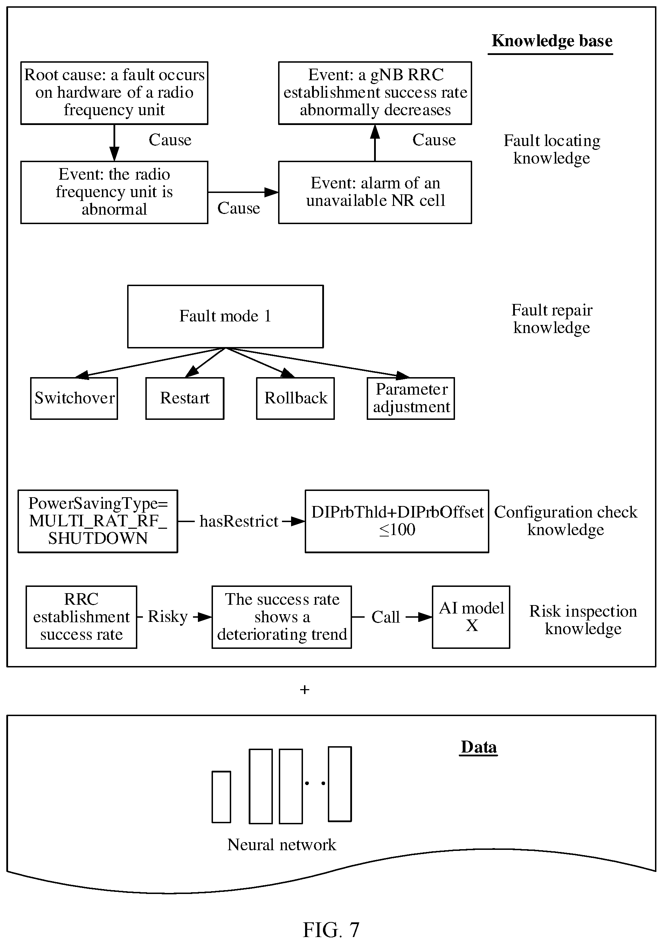

For example, as shown in FIG. 7, a knowledge base may be established. The knowledge base includes a plurality of types of preset knowledge, and the knowledge may generally include expert experience or knowledge acquired from collected data. Knowledge may indicate various types of functions or rules of tasks, or logical chains between types of data on which various functions depend. In this implementation of this application, the knowledge base may include knowledge about a rule for accomplishing an inference task.

The inference solution may be generated further in combination with the data-driven manner. Therefore, machine learning may be performed in advance based on the collected data, to obtain a machine learning model, for example, a neural network shown in FIG. 7. When the inference solution is generated, collected device data may be used as an input of the neural network, and the inference solution is output. In addition, for different inference tasks, different neural networks may be set, or a cross-modal large model for implementing a plurality of functions may be set.

It should be noted that step 601 may be performed when each device is initialized, or active reporting may be performed when data of the network element changes, or data collection may be periodically performed by the EMS. This may be specifically determined based on an actual application scenario. A sequence of performing step 601 is not limited in this application.

602: An NMS sends an inference request to the EMS.

The inference request may be for requesting the EMS to provide an inference solution for accomplishing the inference task (which may be also referred to as an inference intent, a cognitive inference service request, or the like). The inference task may include a task or an intent for managing a communication network, for example, a task or an intent for maintaining or optimizing a communication network.

The inference request may carry information about the inference task, so that the EMS can identify an inference task service that needs to be executed. For example, the inference request may carry a task name, a task field, or a task identifier of the inference task, or may carry task description information. For example, for a fault locating task, the task description information that may be carried may include a fault occurrence time period, a fault occurrence location, and fault event content.

In addition, the NMS may actively send the inference request to the EMS, or may send the inference request to the EMS under triggering of another device or a user. This may be specifically limited based on an actual application scenario, and is not limited in this application.

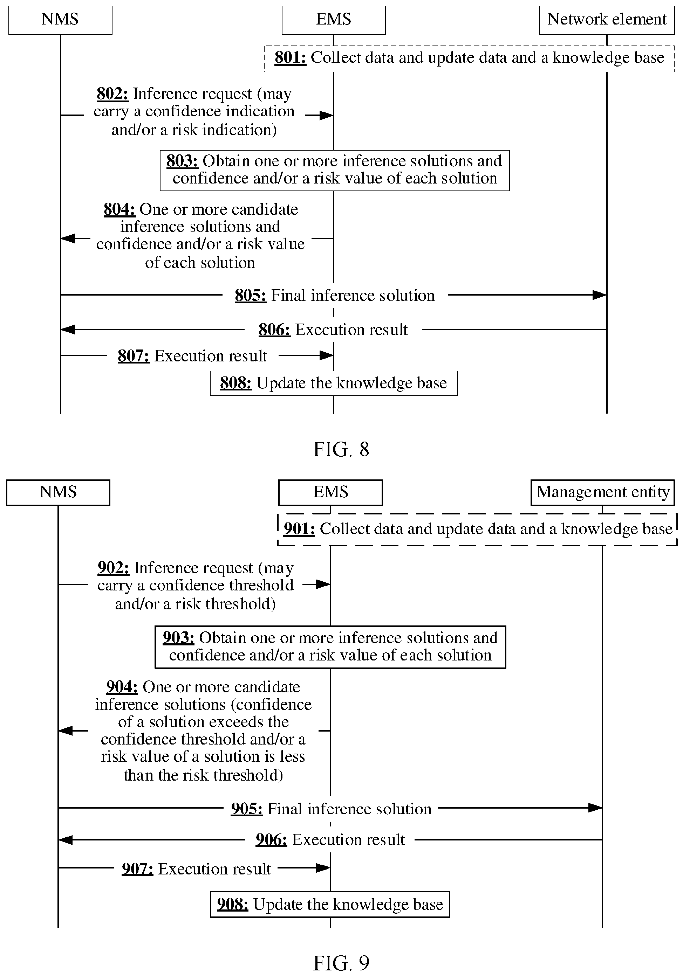

For the foregoing three different scenarios, the inference request may carry different content. For details, refer to the following descriptions corresponding to FIG. 8 to FIG. 10. Details are not described herein.

603: The EMS obtains one or more inference solutions and confidence and/or a risk value of each solution based on the inference request.

After receiving the inference request, the EMS may obtain, based on the inference request in combination with the data-driven manner and/or the knowledge-driven manner, one or more candidate inference solutions and confidence and/or a risk value of each solution, that is, the foregoing first inference solution set.

Specifically, when the inference solution is generated, the one or more inference solutions may be generated in the data-driven manner. For example, data of a device in a communication network that needs to be maintained or optimized may be used as an input of a neural network, to output the inference solution and the confidence and/or the risk value corresponding to each inference solution. Alternatively, the one or more inference solutions may be generated in the knowledge-driven manner. For example, data of a device in a communication network that needs to be maintained or optimized may be read, and a maintenance or optimization solution corresponding to each device is determined based on knowledge, to form a maintenance or optimization solution for the communication network and the confidence and/or the risk value corresponding to each inference solution. Alternatively, the inference solution may be generated in combination with the data-driven manner and the knowledge-driven manner. For example, collected data of a device may be used as input of a neural network, knowledge is used as a constraint, and the one or more inference solutions and the confidence and/or the risk value corresponding to each inference solution are output. A specific calculation manner may be adjusted based on an actual application scenario. This is not limited in this application.

Generally, a value of confidence is related to a probability of accomplishing the inference task. In this application, an example in which the value of the confidence is in a positive correlation relationship with the probability of accomplishing the inference task is used for description. To be specific, higher confidence indicates a higher probability of accomplishing the inference task by using the inference solution, and lower confidence indicates a lower probability of accomplishing the inference task by using the inference solution. It is clear that, in some scenarios, it may be alternatively replaced with that the value of the confidence is in a negative correlation relationship with the probability of accomplishing the inference task. This is not limited in this application.

Correspondingly, the risk value is related to a probability of changing a user service level agreement (SLA) when the inference task is performed and accomplished by using the inference solution. In this application, an example in which the risk value is in a positive correlation relationship with the probability of changing the SLA agreement when the inference task is performed and accomplished by using the inference solution is used for description. To be specific, a lower risk value indicates a lower probability of changing the SLA when the inference task is performed and accomplished by using the inference solution, and a higher risk value indicates a higher probability of changing the SLA when the inference task is performed and accomplished by using the inference solution. It is clear that, it may be alternatively replaced with that the risk value is in a negative correlation relationship with the probability of changing the SLA agreement when the inference task is performed and accomplished by using the inference solution. This may be specifically replaced based on an actual application scenario, and is not limited in this application.

604: The EMS sends one or more candidate inference solutions to the NMS.

After generating the one or more inference solutions and the confidence and/or the risk value of each solution, the EMS may send one or more candidate inference solutions, that is, the foregoing second inference solution set, to the NMS based on the one or more inference solutions and the confidence and/or the risk value of each solution.

Optionally, when the candidate inference solution is sent, confidence and/or a risk value of each candidate inference solution may be sent. For example, when a plurality of candidate inference solutions are sent, confidence and/or a risk value of each inference solution may be synchronously sent; or selection is performed on generated inference solutions based on confidence and/or a risk value of each inference solution, one or more solutions that satisfy a requirement of a user are selected for feedback, and in this case, confidence and/or a risk value of each inference solution may be synchronously sent, or confidence and/or a risk value of each inference solution may not be synchronously sent; or if only one inference solution is fed back, confidence and/or a risk value of each inference solution may be synchronously sent, or confidence and/or a risk value of each inference solution are/is not sent.

Correspondingly, for the foregoing different feedback manners, the inference request may carry different content. For details, refer to the following descriptions corresponding to FIG. 8 to FIG. 10. Details are not described herein.

605: The NMS sends a final inference solution to the network element.

If receiving one candidate inference solution sent by the EMS, the NMS may directly use the one candidate inference solution as the final inference solution, and send the final inference solution to the network element. If receiving a plurality of candidate inference solutions sent by the EMS, the NMS may select one inference solution from the plurality of candidate inference solutions as the final inference solution.

Optionally, if receiving the plurality of candidate inference solutions sent by the EMS, the NMS may randomly select one inference solution; and if also receiving confidence and/or a risk value corresponding to each inference solution, the NMS may select one inference solution from the plurality of inference solutions based on the confidence and/or the risk value of each inference solution, for example, select an inference solution having highest confidence or a solution having a lowest risk value.

In this implementation of this application, the EMS may feed back a candidate inference solution to the NMS based on the confidence and/or the risk value of the inference solution. Therefore, the NMS can determine a better inference solution more accurately.

In addition, when the NMS sends the final inference solution to the network element, the EMS may usually forward the inference solution, and deliver, to each network element device, a maintenance or optimization solution that is included in the inference solution and that is for each device in the communication network, for example, indicating each network element to perform a specified configuration, so as to improve performance of the communication network. A sending manner of the final inference solution is not described in the following implementations of this application.

606: The network element feeds back an execution result to the NMS.

After executing the inference solution, each network element may feed back the execution result to the NMS, for example, a running status of the network element after fault repair is performed, or a power consumption status of the network element after an energy saving solution is used.

607: The NMS sends the execution result to the EMS.

After receiving the execution result, the NMS may send the execution result to the EMS.

608: The EMS updates the data or the knowledge base based on the execution result.

After receiving the execution result, the EMS may update the data or the knowledge base based on the execution result, so that the EMS can obtain a more accurate inference solution when generating an inference solution next time for executing an inference task.

In this implementation of this application, when generating the inference solution, the EMS may synchronously generate the confidence and/or the risk value of each inference solution, in other words, feed back a candidate inference solution based on the confidence and/or the risk value of each inference solution. For example, the EMS performs selection on the generated inference solution based on the confidence and/or the risk value of each inference solution and then delivers an inference solution, or synchronously delivers the confidence and/or the risk value of each inference solution. In this way, the NMS can obtain a needed inference solution more accurately.

For ease of understanding, the following separately describes different inference solution feedback policies.

### Implementation 1: Feed back all the inference solutions and the confidence and/or the risk value of each solution

FIG. 8 is a schematic flowchart of another inference method according to this application. Details are provided below.

801: An EMS collects data from a network element, and updates data and a knowledge base.

For step 801, refer to the related descriptions of step 601. Details are not described herein again.

802: An NMS sends an inference request to the EMS, where the inference request may carry a confidence indication and/or a risk indication.

When the NMS requires the EMS to provide an inference solution for executing an inference task, the NMS can send the inference request to the EMS. For the inference request, refer to the related descriptions of step 602. Similar content is not described again.

Optionally, the inference request may carry a confidence indication (confidence reporting indication) and/or a risk indication (risk reporting indication). The confidence indication may indicate the EMS to synchronously feed back confidence of each inference solution when providing the inference solution. The risk indication may indicate the EMS to synchronously feed back a risk value of each inference solution when providing the inference solution.

803: The EMS obtains one or more inference solutions and confidence and/or a risk value of each solution.

For step 803, refer to the related descriptions of step 603. Details are not described herein again.

804: The EMS sends one or more candidate inference solutions and confidence and/or a risk value of each solution to the NMS.

After generating the one or more inference solutions and the confidence and/or the risk value of each solution, the EMS can send the one or more inference solutions and the confidence and/or the risk value of each solution to the NMS.

805: The NMS sends a final inference solution to the network element.

If receiving only one candidate inference solution, the NMS may determine, based on confidence and/or a risk value of the candidate inference solution, whether to use the candidate inference solution as the final inference solution. For example, if the confidence of the candidate inference solution exceeds a first threshold or the risk value of the candidate inference solution is less than a second threshold, the candidate inference solution may be used as the final inference solution. It is clear that the candidate inference solution may alternatively be directly used as the final inference solution. This is specifically adjusted based on an actual application scenario. In addition, the final inference solution may also be referred to as an actual inference solution, a target inference solution, another alternative name, or the like. This is not limited in this application.

If receiving a plurality of candidate inference solutions, the NMS may select one inference solution as the final inference solution based on confidence and/or risk values of the plurality of candidate inference solutions. For example, an inference solution having highest confidence is selected as the final inference solution, or an inference solution having a lowest risk value is selected as the final inference solution, or an inference solution having a lowest risk value is selected from inference solutions whose confidence is greater than a third threshold as the final inference solution, or an inference solution having highest confidence is selected from inference solutions having a risk value less than a fourth threshold. Selection may be specifically performed based on an actual requirement of a user. This is not limited in this application.

For example, when the EMS sends the inference solution to the NMS, there may be a plurality of cases. For different cases, manners of selecting the final inference solution may also be different.
(1) If only confidence (confidence) is returned, the NMS may select a solution having highest confidence.
(2) If only a risk is returned, the NMS may select a solution having a lowest risk.
(3) If confidence and a risk are returned, the NMS may customize a selection policy (for example, confidence priority, risk value priority, or performing selection based on a value obtained by weighting confidence and a risk).

806: The network element feeds back an execution result to the NMS.

807: The NMS sends the execution result to the EMS.

808: The EMS updates the data or the knowledge base based on the execution result.

For step 806 to step 808, refer to the descriptions of step 606 to step 608. Details are not described herein again.

Therefore, in this implementation of this application, when providing the inference solution for the NMS, the EMS may further synchronously provide the confidence and/or the risk value of each inference solution. In this way, when selecting the final inference solution, the NMS can more accurately select, based on the confidence and/or the risk value of each inference solution, an inference solution that satisfies a requirement.

Implementation 2: Feed back one or more inference solutions satisfying that confidence is higher than a confidence threshold and/or a risk value is less than a risk value threshold

FIG. 9 is a schematic flowchart of another inference method according to this application. Details are provided below.

901: An EMS collects data from a network element, and updates data and a knowledge base.

For step 901, refer to the related descriptions of step 601. Details are not described herein again.

902: An NMS sends an inference request to the EMS, where the inference request may carry a confidence threshold and/or a risk threshold.

For the inference request, refer to the related descriptions of step 602. Similar content is not described again.

A difference lies in that the inference request may optionally carry the confidence threshold and/or the risk threshold. The confidence threshold may indicate the EMS to provide an inference solution whose confidence is greater than the confidence threshold. The risk threshold may indicate the EMS to provide an inference solution having a risk value less than the risk threshold.

903: The EMS obtains one or more inference solutions and confidence and/or a risk value of each solution.

For step 903, refer to the descriptions of step 603. Details are not described herein again.

904: The EMS sends one or more candidate inference solutions to the NMS, where confidence of each solution exceeds the confidence threshold and/or a risk value of each solution is less than the risk threshold.

After generating the one or more inference solutions, the EMS may select, from the one or more inference solutions, an inference solution having confidence exceeding the confidence threshold and/or a risk value less than the risk threshold as a candidate inference solution, and send the one or more candidate inference solutions to the NMS.

The confidence threshold and/or the risk threshold may be from the inference request, or may be a preset default value, or may be a value received when an inference solution is generated last time. This may be specifically adjusted based on an actual application scenario, and is not limited in this application.

Optionally, when sending the one or more candidate inference solutions to the NMS, the EMS may also synchronously send the confidence and/or the risk value of each solution, so that the NMS can learn of an effect that may be generated when the inference task is accomplished by each candidate inference solution.

905: The NMS sends a final inference solution to the network element.

After receiving the one or more candidate inference solutions sent by the EMS, the NMS may select one of the one or more candidate inference solutions as the final inference solution.

Specifically, when receiving one candidate inference solution, the NMS may directly use the candidate inference solution as the final inference solution; or when receiving a plurality of candidate inference solutions, the NMS may randomly select one candidate inference solution as the final inference solution.

Optionally, if the EMS synchronously sends the confidence and/or the risk value of each solution when sending the candidate inference solutions to the NMS, when selecting the final inference solution from the plurality of candidate inference solutions, the NMS may select the final inference solution based on the confidence and/or the risk value of each solution. For example, an inference solution having highest confidence is selected as the final inference solution, or an inference solution having a lowest risk value is selected as the final inference solution, or an inference solution having a lowest risk value is selected from inference solutions whose confidence is greater than a third threshold as the final inference solution, or an inference solution having highest confidence is selected from inference solutions having a risk value less than a fourth threshold. Selection may be specifically performed based on an actual requirement of a user. This is not limited in this application.

906: The network element feeds back an execution result to the NMS.

907: The NMS sends the execution result to the EMS.

908: The EMS updates the data or the knowledge base based on the execution result.

For step 906 to step 908, refer to the descriptions of step 606 to step 608. Details are not described herein again.

Therefore, in this implementation of this application, when providing the inference solution to the NMS, the EMS may provide the inference solution having confidence exceeding the confidence threshold and/or a risk value less than the risk threshold. In this way, an inference solution that satisfies a requirement of the user can be provided, and the user can more accurately select an inference solution that satisfies the requirement. This is equivalent to that confidenceThld (the confidence threshold) and riskThld (the risk threshold) are used to represent preferences of the user for confidence and a risk. In this way, inference results that do not satisfy the preferences of the user can be screened out in advance, a quantity of returned solutions can be reduced, a burden of checking results by the user can be reduced, and efficiency can be improved.

### Implementation 3: Feed back one inference solution that satisfies a requirement specified by the user

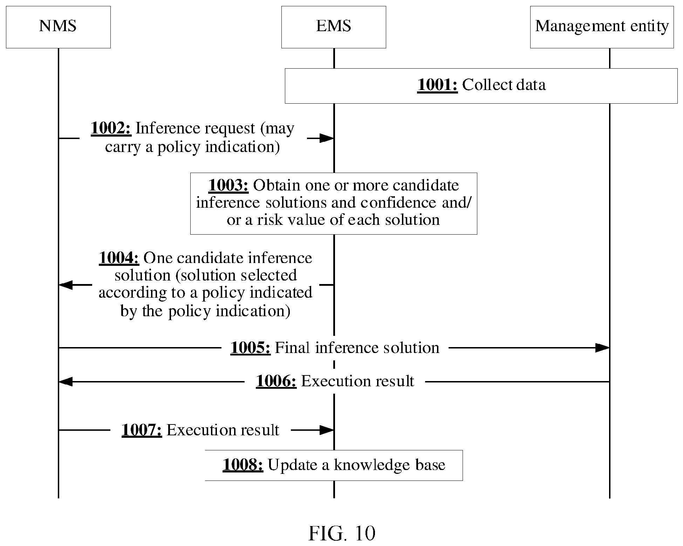

FIG. 10 is a schematic flowchart of another inference method according to this application. Details are provided below.

1001: An EMS collects data from a network element, and updates data and a knowledge base.

For step 1001, refer to the related descriptions of step 601. Details are not described herein again.

1002: An NMS sends an inference request to the EMS, where the inference request may carry a policy indication.

For the inference request, refer to the related descriptions of step 602. Similar content is not described again.

A difference lies in that the inference request may optionally carry the policy indication, to indicate the EMS to provide a selected inference solution that satisfies a policy indicated by the policy indication. For example, the policy indication may be confidence priority, risk value priority, fusion of confidence and a risk value, or the like. This may be specifically determined based on an actual application scenario, and is not limited in this application.

1003: The EMS obtains one or more inference solutions and confidence and/or a risk value of each solution.

For step 1003, refer to the descriptions of step 603. Details are not described herein again.

1004: The EMS sends one candidate inference solution to the NMS, where the solution is a solution selected according to the policy indicated by the policy indication.

After obtaining the one or more inference solutions, the EMS may select one inference solution as a candidate inference solution based on the policy indication. The policy indication may be from the inference request, or may be a preset policy indication, or may be an indication received when an inference solution is selected last time. This may be specifically determined based on an actual application scenario, and is not limited in this application.

Specifically, the policy specifically indicated by the policy indication may include but is not limited to: confidence first, risk value first, fusion of confidence and a risk value indication, or the like. The confidence priority may indicate that the EMS may select a candidate inference solution based on the confidence of each inference solution, for example, select an inference solution having highest confidence as the candidate inference solution. The risk value priority may indicate that the EMS may select a candidate inference solution based on the risk value of each inference solution, for example, may select a solution having a lowest risk value as the candidate inference solution. The fusion of confidence and a risk value indication may indicate that the EMS may select a candidate inference solution based on the confidence and the risk value of each inference solution, for example, may perform weighted fusion on the confidence and the risk value of each inference solution, and select a candidate inference solution based on a value obtained through the fusion. Optionally, the risk value is generally in a negative correlation relationship with a probability that a solution is selected. For example, a lower risk value indicates a higher probability that a solution is selected, and a higher risk value indicates a lower probability that a solution is selected. In this way, a candidate inference solution having a lower risk value is selected.

1005: The NMS sends a final inference solution to the network element.

In this implementation of this application, the NMS may receive one candidate inference solution sent by the EMS. Therefore, the NMS may directly send the candidate inference solution as the final inference solution to the EMS without a need of performing selection. It is equivalent to that when sending the candidate inference solution, the EMS performs selection based on the policy indication. In this way, selection steps for the NMS are reduced, and efficiency of selecting the final inference solution by the NMS is improved.

1006: The network element feeds back an execution result to the NMS.

1007: The NMS sends the execution result to the EMS.

1008: The EMS updates the data or the knowledge base based on the execution result.

For step 1006 to step 1008, refer to the descriptions of step 606 to step 608. Details are not described herein again.

In this implementation of this application, the EMS may directly send, based on the policy indication, an inference solution that satisfies a requirement to the NMS, and the NMS can directly obtain the inference solution that satisfies the requirement without a need of performing selection, so as to obtain a needed inference solution more accurately.

The following describes, with reference to some possible application scenarios, an example of a scenario to which the method provided in this application may be applied.

### Application scenario 1: fault Locating and repair scenario

A fault locating cognitive inference service task is to locate a hardware fault, a software fault, or the like in a communication network, and may specifically include but is not limited to information such as a fault occurrence location, a fault-related alarm, a fault event, and the like. A fault repair cognitive inference service task may specifically include but is not limited to a fault-specific processing manner, for example, restart, parameter adjustment, active/standby switchover, or board reset.

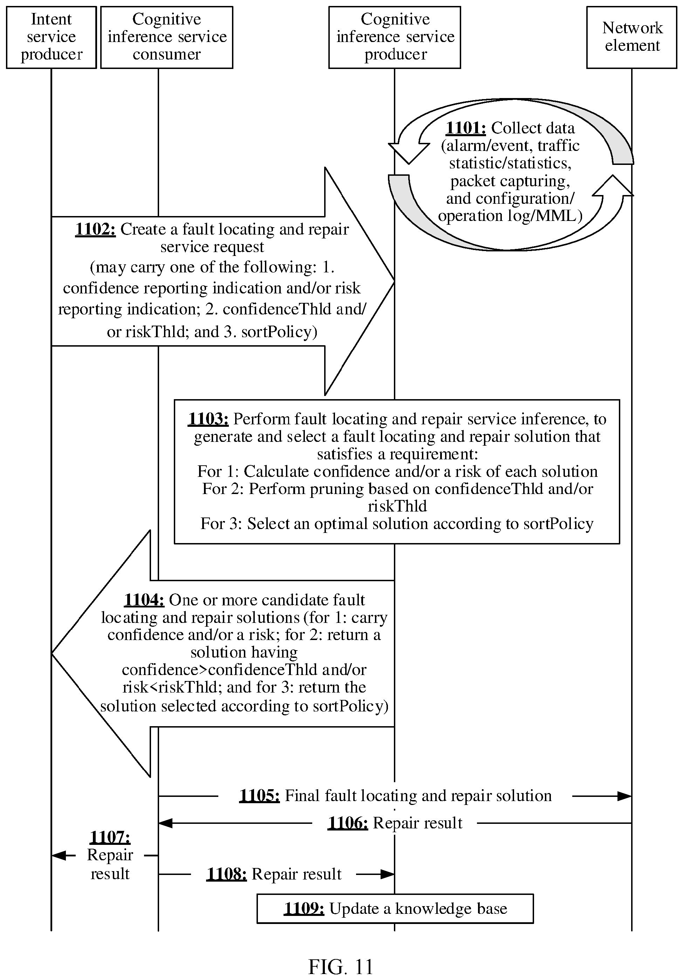

FIG. 11 is a schematic flowchart of another inference method according to this application. Details are provided below.

1101: A cognitive inference service producer collects data.

The cognitive inference service producer may pre-collect data, which may specifically include information about a network element managed by the cognitive inference service producer, for example, information such as a log, a configuration, a status, or a detected event of each network element.

For example, the cognitive inference service producer may collect information such as an alarm, an event, traffic statistics, statistics, packet capturing data, configuration information, or an operation log generated by a network element managed by an EMS. The alarm may include an alarm generated when a device detects a fault. The traffic statistics may include traffic information obtained through statistics. The packet capturing data includes data captured during running of a device, and is usually used for detecting network security. The configuration information may include information about a configuration used by each device during running. The operation log includes an operation record of each device when the device actively or passively performs an operation.

After receiving a plurality of requests, the cognitive inference service producer collects data generated by each device, or after device data changes, changed data is actively reported to the cognitive inference service producer, or after an execution result is generated after a previous inference task is executed, knowledge is stored in a triplet manner. For example, a confidence (confidence) attribute or a risk (risk value) attribute is added for the knowledge. If some knowledge causes problems during solution delivery, a risk of the corresponding knowledge is to increase.

1102: A cognitive inference service consumer creates a fault locating and repair service request for the cognitive inference service producer under triggering of an intent service producer.

Generally, the intent service producer may generate a cognitive inference service, and trigger the cognitive inference service consumer to create the fault locating and repair service request for the cognitive inference service producer.

The request may specifically include but is not limited to:
task name: fault locating, fault repair, and the like; and
task description information: fault object (FailurePredictionObjec), potential fault type (PotentialFailureType), fault occurrence time (EventTime), fault severity, fault occurrence location, fault event content, and the like.

For details of information carried in the request, refer to records in a related standard. For example, information carried in a request in a fault locating scenario is recorded in the standard document 3GPP TS 28.104 V1.1.0.

In addition, with reference to Implementation 1 to Implementation 3, an indication that may be carried in the inference request may include but is not limited to one or more of the following:
1. confidence reporting indication (that is, the foregoing confidence indication) and/or risk reporting indication (that is, the foregoing risk indication);
2. confidenceThld (that is, the foregoing confidence threshold) and/or riskThld (that is, the foregoing risk threshold); and
3. sortPolicy (that is, the foregoing policy indication).

The confidence reporting indication may indicate the cognitive inference service producer to also feed back confidence (confidence) of each solution when providing a fault locating and repair solution. The risk reporting indication may indicate the cognitive inference service producer to also feed back a risk value (risk) of each inference solution when providing a fault locating and repair solution.

confidenceThld may indicate the cognitive inference service producer to feed back a solution whose confidence is greater than or not less than confidenceThld when providing a fault locating and repair solution. riskThld may indicate the cognitive inference service producer to feed back a solution having a risk value less than or not higher than riskThld when providing a fault locating and repair solution.

sortPolicy may indicate the cognitive inference service producer to select, when providing a fault locating and repair solution, one solution for feedback according to a policy indicated by sortPolicy. For example, sortPolicy may be set to confidence Priority (that is confidence priority), riskPriority (that is, low risk priority), or a customized formula for weighted calculation of confidence and a risk, for example, may be set to sortPolicy=0.5*confidence+0.5*(1-risk).

In this implementation of this application, an interface between the cognitive inference service producer and the cognitive inference service consumer is enhanced, and information about confidence and a risk of a result is supplemented based on a returned field for the cognitive inference request, to assist a user on a cognitive inference service consumer side in better selecting and determining a solution, so as to improve problem closure efficiency.

1103: The cognitive inference service producer performs fault locating and repair service inference, to generate and select an inference solution that satisfies a requirement.

After receiving the created fault locating and repair service request, the cognitive inference service producer may read, based on the request, related knowledge and data, including information about confidence and a risk in the knowledge triplet; execute a cognitive inference algorithm or run a neural network; calculate a fault root cause and confidence and/or a risk of a repair operation in an inference process; and generate a fault locating and repair service inference solution.

Specifically, fault locating and repair service inference may be accomplished by using an internal algorithm of the producer. For example, during root cause inference, a probability of a root cause may be calculated by using an algorithm such as a random walk algorithm, and in this manner, an internal algorithm capability of the cognitive inference producer needs to be enhanced. Alternatively, the fault locating and repair service inference solution may be generated with reference to knowledge in a knowledge base.

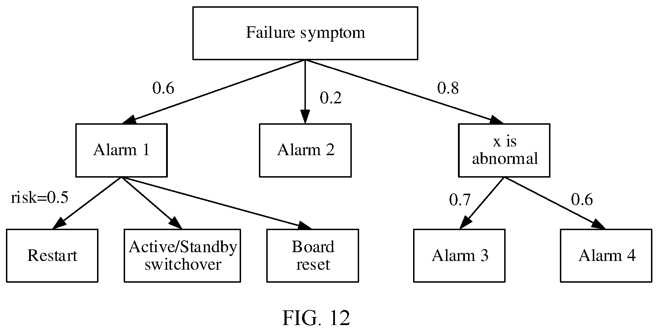

For example, in the knowledge base, the knowledge may be stored in a triplet manner. The knowledge base carries information about confidence and a risk. Definitions of triplet attributes of a knowledge graph are enriched, so that a confidence attribute and a risk attribute are added for a conventional triplet of header entity-relationship-tail entity. As shown in FIG. 12, for example, for a fault symptom, a probability of causing an alarm 1 is 0.6; a probability of causing an alarm 2 is 0.2; a probability of causing an abnormal KPI x is 0.8; and when a KPI x is abnormal, a probability of causing an alarm 3 is 0.7, and a probability of causing an alarm 4 is 0.6. In a case of the alarm 1, a risk of performing repair by restarting is 0.5. The rest may be deduced by analogy.

1104: The cognitive inference service producer feeds back one or more candidate fault locating and repair solutions to the cognitive inference service consumer.

When the fault locating and repair service inference solution is returned, a specific solution that is returned may be determined based on an indication carried in the inference request.

For example, the following plurality of cases may be included but not limited thereto:
1. If the inference request carries a confidence reporting indication and/or a risk reporting indication, when an inference solution is fed back, the confidence and/or the risk are/is synchronously returned, for example, which may be expressed as [{"solution" (inference solution): x, "confidence" (confidence): 0.5, "risk" (risk value): 0.7}, ...].
2. If the inference request carries confidenceThld and/or riskThld, when an inference solution is fed back, a solution having confidence>(≥)confidenceThld and/or risk<(≤)riskThld may be selected from the generated solution.
3. If the inference request carries sortPolicy, one inference solution may be selected from the generated inference solution according to sortPolicy and different policies. For example, if sortPolicy=confidencePriority, an inference solution having highest confidence may be selected for feedback; if sortPolicy=riskPriority, a solution having a lowest risk value may be directly returned; or if sortPolicy is a customized formula for weighted fusion, calculation may be performed according to the formula, and one inference solution is returned based on a score obtained through calculation, for example, a solution having a highest score is returned.

In this implementation of this application, for different indications carried in the inference request, a corresponding inference solution may be adaptively returned. Therefore, in various cases, a requester can accurately select a needed solution, to implement more accurate fault locating and repair.

For Case 1, when the cognitive inference service consumer sends a cognitive inference service request, in addition to an existing basic task information description, a confidence reporting indication and a risk reporting indication are added. The cognitive inference service producer returns an inference result and corresponding confidence and a corresponding risk based on content of the request, to respectively indicate a probability that the result is correct and a probability that the result may cause a risk. In this way, the user can better understand reliability of each solution and select a needed solution, to improve problem closure efficiency. To be specific, when the cognitive inference service producer returns a plurality of inference results, information about confidence and/or risks of the results is carried, to indicate the confidence and risks of the results, so that the user can better select a proper solution based on a requirement.

For Case 2, when the cognitive inference service consumer sends the request, content of the request includes a confidenceThld (the confidence threshold) field and/or a riskThld (the risk threshold) field. The cognitive inference service producer may perform pruning in advance based on a threshold requirement in an inference process, to improve inference efficiency; and return only a result that satisfies confidence>confidenceThld and risk<riskThld, to reduce a quantity of returned invalid results. In this way, a burden of selecting a solution by the consumer can be reduced. To be specific, confidenceThld and riskThld are used to represent preferences of the user for confidence and a risk. In this way, inference results that do not satisfy the preferences of the user can be screened out in advance, a quantity of returned solutions can be reduced, a burden of checking results by the user can be reduced, and efficiency can be improved.

For Case 3, a solution selection policy sortPolicy is added. When a cognitive inference service request is sent, a selection policy preferred by the user is carried. The cognitive inference service producer internally directly performs selection from a plurality of solutions, and the cognitive inference service consumer directly receives an optimal solution. This saves time for independent selection and analysis on a consumer side, and improves problem closure efficiency. In other words, the cognitive inference service request carries a solution selection policy field sortPolicy customized by the user, and the cognitive inference service producer directly returns only one optimal result based on preferences of the user, so that there is no need for the consumer to perform selection from a plurality of returned results.

1105: The cognitive inference service consumer delivers a final fault locating and repair solution to the network element.

After receiving one or more fault locating and repair solutions sent by the cognitive inference service producer, the cognitive inference service consumer selects one fault locating and repair solution as the final fault locating and repair solution, and sends the final fault locating and repair solution to a related network element.

Generally, if receiving one fault locating and repair solution, the cognitive inference service consumer uses the one fault locating and repair solution as the final fault locating and repair solution, and delivers the final fault locating and repair solution to the corresponding network element.

If receiving a plurality of fault locating and repair solutions, the cognitive inference service consumer may select one fault locating and repair solution from the plurality of fault locating and repair solutions as the final fault locating and repair solution. Specifically, the selection may be performed randomly, or may be performed according to a preset rule. For example, if confidence and/or a risk of each solution are/is also received, a solution having highest confidence may be selected, or a solution having a lowest risk value may be selected, or a solution having a highest value or a lowest value based on a fusion score obtained through weighted fusion of confidence and a risk may be selected. This may be specifically adjusted based on an actual application scenario.

In some possible scenarios, when a plurality of inference solutions are received, the intent service producer may select one inference solution as a final inference solution. For example, in the fault locating and repair solution in this embodiment of this application, the intent service producer may select a final fault locating and repair solution.

In addition, the cognitive inference service consumer may directly deliver the received fault locating and repair solution to the network element, or may deliver the received fault locating and repair solution after generating different control data based on different network elements. For example, for the fault locating and repair solution, data, a configuration, or the like for performing fault repair on a fault may be delivered to a related network element based on a fault locating result, to implement repair after fault locating.

1106: The network element feeds back a repair result to the cognitive inference service consumer.

After receiving the fault locating and repair solution delivered by the cognitive inference service consumer, the network element can execute the corresponding solution to implement fault repair. For example, for fault repair, each network element may perform a corresponding operation through switchover, restart, rollback, or parameter adjustment, and feed back a repair result after the execution to the cognitive inference service consumer, for example, whether a fault is repaired after the received repair solution is executed.

1107: The cognitive inference service consumer feeds back the repair result to the intent service producer.

After receiving the repair result fed back by the network element, the cognitive inference service consumer may feed back the repair result to the intent service producer, so that the intent service producer learns of a fault repair status, or determines whether an intent is achieved. If the intent is not achieved, the foregoing step 1102 may be performed again.

1108: The cognitive inference service consumer sends the repair result to the cognitive inference service producer.

The cognitive inference service consumer may further send the repair result to the cognitive inference service producer, to indicate the cognitive inference service producer to update the knowledge base.

1109: The cognitive inference service producer updates the knowledge base.

After receiving an execution result of the inference solution, the cognitive inference service producer can update the knowledge base. The cognitive inference service consumer sends, to the cognitive inference service producer based on the final execution result, a request for updating confidence and a risk of the knowledge, to request to update the knowledge base of the producer. Generally, if an intent target is finally fulfilled based on some knowledge in the knowledge base, it indicates that confidence of the knowledge is high, and a confidence attribute of a knowledge triplet may increase accordingly. If use of some knowledge finally causes problems during solution delivery, a risk of the corresponding knowledge is to increase.

Generally, in a knowledge-driven manner, a knowledge mining capability needs to be enhanced, the information about the confidence and the risk in the knowledge base needs to be supplemented, and the knowledge base may be updated reversely based on an application result (a consumer feedback) of the solution. Refer to the foregoing FIG. 12. After a fault repair solution is generated and executed in a network element, knowledge in a knowledge base may be modified reversely based on an execution result, for example, confidence and/or a risk corresponding to each fault repair operation corresponding to each alarm may be adjusted.

In this implementation of this application, in a fault repair and locating case, the cognitive inference service producer may generate a plurality of feasible fault locating and repair solutions and confidence and/or a risk corresponding to each solution. When feeding back the fault and repair solution to the cognitive inference service consumer, the confidence and/or the risk corresponding to each solution may be synchronously fed back. In this way, the cognitive inference service consumer can select a needed fault locating and repair solution based on the confidence and/or the risk corresponding to each solution. Further, the cognitive inference service producer may perform selection on the generated fault locating and repair solutions based on the confidence and/or the risk corresponding to each solution, for example, perform selection based on confidenceThld and/or riskThld or according to sortPolicy, so that a solution that satisfies a requirement of the cognitive inference service consumer can be fed back to the cognitive inference service consumer. In this way, steps that the cognitive inference service consumer needs to perform selection are reduced, or the cognitive inference service consumer does not need to perform selection, so that a needed solution can be obtained for the cognitive inference service more directly and accurately.

### Application scenario 2: energy saving recommendation scenario

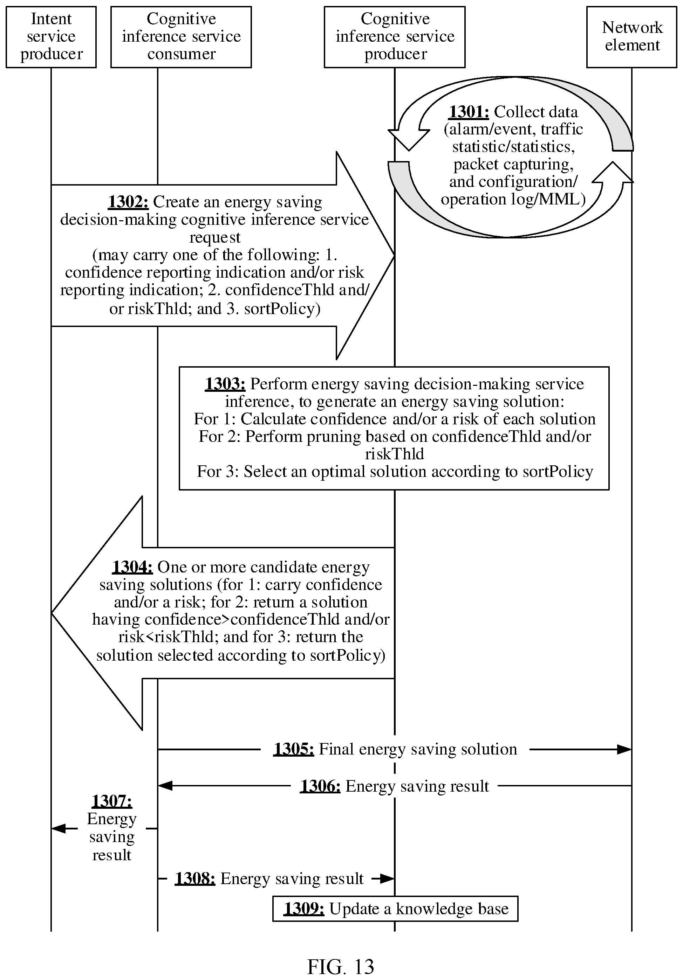

FIG. 13 is a schematic flowchart of another inference method according to this application. Details are provided below.

1301: A cognitive inference service producer collects data.

Step 1301 is similar to the foregoing step 1101. For details, refer to the related descriptions of step 1101. Details are not described herein again.

In the energy saving recommendation scenario, the data collected by the cognitive inference service producer may usually include but is not limited to: running performance of a network element, quality of experience (Quality of Experience, QoE) data, network element configuration data, network analysis data, or the like. Data that needs to be collected may be specifically obtained based on an actual application scenario.

1302: A cognitive inference service consumer creates an energy saving decision-making cognitive inference service request for the cognitive inference service producer under triggering of an intent service producer.

Similar to the foregoing step 1102, similar parts are not described herein again. The following describes a difference part.

The created energy saving decision-making cognitive inference service request may carry an energy saving effect region, an energy saving target, an experience constraint, an effect time period, or the like.

1303: The cognitive inference service producer performs energy saving decision-making service inference, to generate an energy saving solution.

After receiving the created energy saving decision-making cognitive inference service request, the cognitive inference service producer can perform the energy saving decision-making service inference based on information carried in the created energy saving decision-making cognitive inference service request, to generate the energy saving solution in a knowledge-driven manner and/or a data-driven manner.

The energy saving solution may specifically include a solution of performing energy saving management on a device on which energy saving management needs to be performed in the energy saving region or the energy saving time period mentioned in the request. Specifically, the energy saving solution may include but is not limited to information such as an object/network element on which energy saving is to be performed, an energy saving type, a network load trend, an energy saving suggestion (an energy saving policy, for example, disabling some network elements in an energy saving time period or disabling some network elements in an energy saving region), or a grid status after energy saving.

1304: The cognitive inference service producer feeds back one or more energy saving solutions to the cognitive inference service customer.

1305: The cognitive inference service consumer delivers a final energy saving solution to the network element.

1306: The network element feeds back an energy saving result to the cognitive inference service consumer.

1307: The cognitive inference service consumer feeds back the energy saving result to the intent service producer.

1308: The cognitive inference service consumer sends the energy saving result to the cognitive inference service producer.

1309: Update a knowledge base.

Step 1304 to step 1309 are similar to step 1104 to step 1109. A difference lies in that the foregoing fault locating and repair is replaced with energy saving. For details, refer to the related descriptions of step 1104 to step 1109. Details are not described herein again.

In this implementation of this application, for the energy saving recommendation scenario, the cognitive inference service producer may still generate one or more energy saving solutions (or referred to as energy saving recommendation solutions, energy saving decision-making solutions, or the like) and confidence and/or a risk value corresponding to each energy saving solution, and feed back, based on an indication of the cognitive inference service consumer, the generated energy saving solution and the confidence and/or the risk value corresponding to each energy saving solution. In this way, the cognitive inference service consumer can perform selection on the solution based on the confidence and/or risk value of each solution, to accurately obtain a needed energy saving solution. Alternatively, the cognitive inference service producer is indicated to perform selection on the generated energy saving solution and then feed back an energy saving solution. In this way, the cognitive inference service consumer can directly accurately obtain a needed energy saving solution without a need of performing selection.

For ease of understanding effects implemented by the solution provided in this application, descriptions are provided below through a comparison between an existing solution and the solution provided in this application.

The following separately provides descriptions through a comparison between the existing solution and the solution provided in this application from two dimensions: an NMS and an EMS.

Table 2 shows a comparison between steps performed by an EMS in the existing solution and steps performed by an EMS in the solution provided in this application.

**Table 2**

| Existing solution | Embodiments of this application | Comparison description |
|---|---|---|
| A cognitive inference service producer receives an inference request from a consumer. | A cognitive inference service producer receives an inference request from a consumer, where the inference request may carry one of the following: 1. confidence reporting indication and/or risk reporting indication; 2. confidenceThld and/or riskThld; and 3. sortPolicy. | |
| The cognitive inference service producer returns an inference solution to the cognitive inference service consumer. | The cognitive inference service producer returns an inference solution and confidence and/or a risk corresponding to the inference solution to the consumer, where the confidence indicates a probability that a result can be used for achieving an intent target, and the risk indicates a probability that the result affects a user SLA after being delivered. | Innovation point |
| The cognitive inference service producer reads knowledge and data for inference, to generate the inference solution. | The cognitive inference service producer reads knowledge and data for inference and calculates the confidence and the risk of each solution. | Innovation point |
| The cognitive inference service producer reads knowledge and data for inference, to generate the inference solution, and returns the solution to the cognitive inference service consumer. | The cognitive inference service producer reads knowledge and data for inference, and with a solution pruning capability being internally enhanced, when the request from the consumer includes a confidenceThld/riskThld field, only returns an inference solution having confidence>confidenceThld and risk<riskThld. | Innovation point |
| The cognitive inference service producer reads knowledge and data for inference, to generate the inference solution, and returns the solution to the consumer. | The cognitive inference service producer reads knowledge and data for inference, and with a solution selecting capability being internally enhanced, when the request from the consumer includes a sortPolicy field, directly returns one solution that most satisfies a requirement of the consumer based on content of sortPolicy. | Innovation point |
| None | The cognitive inference service producer accepts a request for updating confidence and a risk of knowledge, and updates related attributes in a knowledge base. | Innovation point |

Table 3 shows a comparison between steps performed by an NMS in the existing solution and steps performed by an NMS in the solution provided in this application.

**Table 3**

| Existing solution | Embodiments of this application | Comparison description |
|---|---|---|
| A cognitive inference service consumer sends a cognitive inference service request to a producer, where the request carries a description of an inference task. | A cognitive inference service consumer sends a cognitive inference service request to a producer, where the request carries a description of an inference task, and is added with a confidence reporting indication and/or a risk reporting indication. | Innovation point |
| The cognitive inference service consumer sends the cognitive inference service request to the producer, where the request carries the description of the inference task. | The cognitive inference service consumer sends the cognitive inference service request to the producer, where the request carries the description of the inference task, and is also added with confidenceThld (a confidence preference threshold) and/or riskThld (a risk preference threshold). | Innovation point |
| The cognitive inference service consumer sends the cognitive inference service request to the producer, where the request carries the description of the inference task. | The cognitive inference service consumer sends the cognitive inference service request to the producer, where the request carries the description of the inference task, and is added with a sortPolicy field (confidence priority/risk priority/customized weighting policy) to indicate a selection policy for a plurality of inference results. | Innovation point |
| None | The cognitive inference service consumer sends, to the producer based on an actual solution execution result, a request for updating confidence and a risk of knowledge. | Innovation point |

It is clear that, according to the solution provided in this embodiment of this application, the cognitive inference service consumer can obtain a more accurate inference solution. For example, the cognitive inference service consumer may perform selection based on the received confidence and/or risk of each inference solution, to obtain an inference solution that satisfies a requirement. Alternatively, an indication, for example, confidenceThld/riskThld/sortPolicy, may be carried in the inference request, so that the cognitive inference service producer can perform selection on the generated solution, so that the cognitive inference service consumer can directly obtain an inference solution that satisfies a requirement.

The foregoing describes the method procedure provided in this application. The following describes an apparatus for performing the foregoing method.

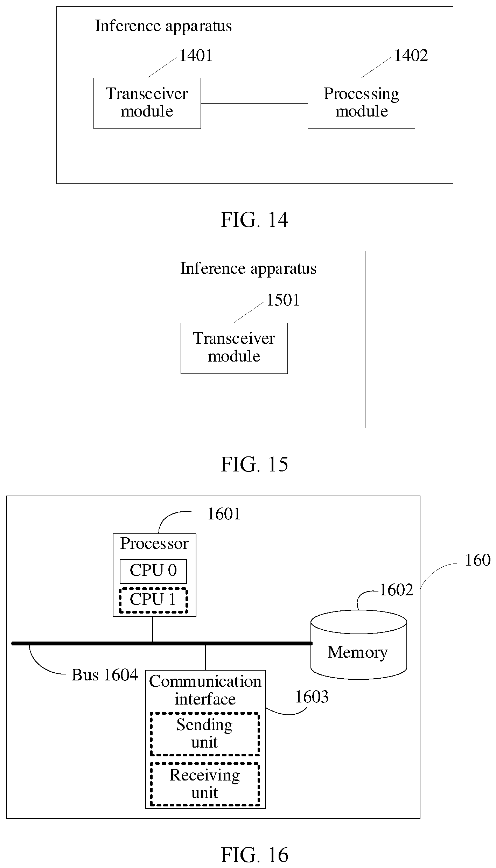

FIG. 14 is a diagram of a structure of an inference apparatus according to this application. Details are provided below.

The inference apparatus may be specifically deployed in the foregoing EMS, the foregoing cognitive inference service producer, or the like. The inference apparatus may specifically include:
a transceiver module 1401, configured to receive an inference request, where the inference request is for requesting to provide a solution for accomplishing an inference task, and the inference task includes a task for fulfilling a user intent target; and
a processing module 1402, configured to obtain a first inference solution set based on the inference request, where the first inference solution set includes at least one inference solution and at least one of confidence or a risk value corresponding to each inference solution, each inference solution is for accomplishing the inference task, the confidence indicates a probability of accomplishing the inference task by using the inference solution, and the risk value indicates a probability of changing user experience when the inference task is accomplished by using the inference solution.

The transceiver module 1401 is further configured to send a second inference solution set, where the second inference solution set includes at least one solution in the first inference solution set.

In a possible implementation, the processing module 1402 is further configured to use the first inference solution set as the second inference solution set.

The transceiver module 1401 is specifically configured to send the second inference solution set.

In a possible implementation, the inference request further carries a confidence indication and/or a risk indication, the confidence indication is for requesting to provide confidence corresponding to an inference solution, and the risk indication is for requesting to provide a risk value corresponding to an inference solution.

In a possible implementation, the processing module 1402 is specifically configured to select, from the first inference solution set, a solution whose confidence is greater than a confidence threshold and/or a solution whose risk value is greater than a risk threshold, to obtain the second inference solution set.

The transceiver module 1401 is specifically configured to send the second inference solution set.

In a possible implementation, the inference request further carries the confidence threshold and/or the risk threshold.

In a possible implementation, the processing module 1402 is specifically configured to select, from the first inference solution set, one inference solution as a solution in the second inference solution set based on at least one of the confidence or the risk value corresponding to each inference solution.

The transceiver module 1401 is specifically configured to send the second inference solution set.

In a possible implementation, the processing module 1402 is specifically configured to select, from the first inference solution set, one inference solution that satisfies a selecting condition, where the selecting condition includes at least one of the following: an inference solution having highest confidence, an inference solution having a lowest risk value, or an inference solution having a highest fusion value obtained by fusing confidence and a risk value.

In a possible implementation, the inference request further carries a policy indication, and the policy indication indicates at least one item in the selecting condition.

In a possible implementation, the second inference solution set further includes at least one of confidence or a risk value corresponding to an inference solution.

In a possible implementation, the processing module 1402 is specifically configured to: obtain monitoring data and a knowledge base that correspond to the inference task, where the monitoring data includes data of a device related to the inference task, and knowledge in the knowledge base includes a rule for accomplishing the inference task; and obtain the first inference solution set based on the monitoring data and the knowledge.

In a possible implementation, the transceiver module 1401 is further configured to obtain an execution result, where the execution result is obtained by executing an inference solution included in the second inference solution set.

The processing module 1402 is further configured to update the knowledge based on the execution result to obtain updated knowledge.

In a possible implementation, the inference task includes at least one of a fault locating task, a fault repair task, a configuration check task, a potential risk identification task, or a solution recommendation task. The fault locating task indicates to locate a fault root cause of a device. The fault repair task indicates to repair a device on which a fault occurs. The configuration check task indicates to check a configuration of a device. The potential risk identification task indicates to obtain a probability that a fault occurs on a device. The solution recommendation task indicates to obtain at least one solution for executing a target task.

FIG. 15 is a diagram of a structure of an inference apparatus according to this application. Details are provided below.

The inference apparatus may be specifically deployed in the foregoing NMS, the foregoing cognitive inference service consumer, or the like. The inference apparatus may specifically include:
a transceiver module 1501, configured to send an inference request, where the inference request is for requesting to provide a solution for accomplishing an inference task, and the inference task includes a task for fulfilling a user intent target.

The transceiver module 1501 is further configured to receive a second inference solution set, where the second inference solution set includes at least one inference solution, the second inference solution set is obtained from a first inference solution set, the first inference solution set is a set generated based on the inference request, the first inference solution set includes at least one inference solution and at least one of confidence or a risk value corresponding to each inference solution, each inference solution is for accomplishing the inference task, the confidence indicates a probability of accomplishing the inference task by using the inference solution, and the risk value indicates a probability of changing user experience when the inference task is accomplished by using the inference solution.

In a possible implementation, the second inference solution set further includes at least one of confidence or a risk value corresponding to each of the at least one inference solution.

In a possible implementation, the inference request further carries a confidence indication and/or a risk indication, the confidence indication is for requesting to provide confidence corresponding to an inference solution, and the risk indication is for requesting to provide a risk value corresponding to an inference solution.

In a possible implementation, the confidence of the inference solution included in the second inference solution set is higher than a confidence threshold and/or the risk value of the inference solution included in the second inference solution set is higher than a risk threshold.

In a possible implementation, the inference request further carries the confidence threshold and/or the risk threshold.

In a possible implementation, the second inference solution set includes one inference solution, and the one inference solution is obtained by performing selection from the first inference solution set based on the confidence and/or the risk value.

In a possible implementation, the inference request further carries a policy indication, and the policy indication indicates to provide one inference solution.

In a possible implementation, the policy indication further indicates at least one item in a selecting condition, and the selecting condition includes at least one of the following: an inference solution having highest confidence, an inference solution having a lowest risk value, or an inference solution having a highest fusion value obtained by fusing confidence and a risk value.

In a possible implementation, the transceiver module 1501 is further configured to:
send the inference solution in the second inference solution set;
receive an execution result, where the execution result is an execution result obtained by accomplishing the inference task by using the inference solution in the second inference solution set; and
send the execution result, where the execution result is for updating knowledge, the knowledge is for determining the second inference solution set, and the knowledge includes a rule for accomplishing the inference task.

FIG. 16 is a diagram of a hardware structure of a computer device 160 according to an embodiment of this application. The computer device 160 may be configured to implement a function of the NMS or the EMS in the foregoing method.

The computer device 160 shown in FIG. 16 may include a processor 1601, a memory 1602, a communication interface 1603, and a bus 1604. The processor 1601, the memory 1602, and the communication interface 1603 may be connected via the bus 1604.

The processor 1601 is a control center for generating the computer device 160, and may be a general-purpose central processing unit (central processing unit, CPU), another general-purpose processor, or the like. The general-purpose processor may be a microprocessor, any conventional processor, or the like.

For example, the processor 1601 may include one or more CPUs, for example, a CPU 0 and a CPU 1 shown in FIG. 16.

The memory 1602 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a magnetic disk storage medium or another magnetic storage device, or any other medium that can be used to carry or store expected program code in a form of instructions or a data structure and that can be accessed by a computer, but is not limited thereto.

In a possible implementation, the memory 1602 may be independent of the processor 1601. The memory 1602 may be connected to the processor 1601 via the bus 1604, and is configured to store data, instructions, or program code. When invoking and executing the instructions or the program code stored in the memory 1602, the processor 1601 can implement a method provided in embodiments of this application.

In another possible implementation, the memory 1602 may alternatively be integrated with the processor 1601.

The communication interface 1603 is configured to connect the computer device 160 to another device via a communication network. The communication network may be an Ethernet, a radio access network (radio access network, RAN), a wireless local area network (wireless local area network, WLAN), or the like. The communication interface 1603 may include a receiving unit configured to receive data and a sending unit configured to send data.

The bus 1604 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one bold line is used in FIG. 16 for representation, but this does not mean that there is only one bus or only one type of bus.

It should be noted that the structure shown in FIG. 16 does not constitute a limitation on the computer device 160. In addition to the components shown in FIG. 16, the computer device 160 may include more or fewer components than those shown in the figure, or some components may be combined, or a different component deployment may be used.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by corresponding hardware. Moreover, a specific hardware structure used to achieve a same function may be in various forms, for example, in a form of an analog circuit, a digital circuit, or a dedicated circuit. However, for this application, software program implementation is a better implementation in most cases. Based on such an understanding, the technical solutions of this application essentially or the part contributing to the conventional technology may be implemented in a form of a software product. The computer software product is stored in a readable storage medium, like a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by software, hardware, firmware, or any combination thereof. When software is used to implement the foregoing embodiments, all or some of the foregoing embodiments may be implemented in a form of a computer program product.

An embodiment of this application further provides a computer-readable storage medium. The computer-readable storage medium stores a program used for training a model or executing an inference task. When the program is run on a computer, the computer is caused to perform all or some of the steps in the methods described in embodiments shown in FIG. 4 to FIG. 12.

An embodiment of this application further provides a digital processing chip. A circuit and one or more interfaces that are configured to implement the foregoing processor or a function of the processor are integrated into the digital processing chip. When a memory is integrated into the digital processing chip, the digital processing chip may complete the method steps in any one or more embodiments in the foregoing embodiments. When a memory is not integrated into the digital processing chip, the digital processing chip may be connected to an external memory through a communication interface. The digital processing chip implements the method steps in any one or more embodiments in the foregoing embodiments based on program code stored in the external memory.

An embodiment of this application further provides a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

A person of ordinary skill in the art may understand that all or some the steps of the methods in embodiments may be completed by a program instructing relevant hardware. The program may be stored in a computer-readable storage medium. The storage medium may include a ROM, a RAM, a magnetic disk, or an optical disc.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. The term "and/or" in this application describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects. In addition, the terms "include", "have", and any other variant thereof are intended to cover a non-exclusive inclusion. For example, a process, method, system, product, or device that includes a series of steps or modules is not necessarily limited to those steps or modules that are expressly listed, but may include other steps or modules that are not expressly listed or that are inherent to the process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into the modules in this application is logical division. In actual application, there may be another division manner. For example, a plurality of modules may be combined or integrated into another system, or some features may be ignored or may not be performed. In addition, the displayed or discussed mutual coupling or direct coupling or communication connection may be through some ports, and the indirect coupling or communication connection between modules may be in an electrical form or another similar form. This is not limited in this application. In addition, modules or sub-modules described as separate components may be or may not be physically separated, or may be or may not be physical modules, or may not be grouped into a plurality of circuit modules. Objectives of the solutions of this application may be achieved by selecting some or all of the modules according to actual requirements.

## Claims

1. An inference method, comprising:
receiving an inference request, wherein the inference request is for requesting to provide a solution for accomplishing an inference task, and the inference task comprises a task for fulfilling a user intent target;
obtaining a first inference solution set based on the inference request, wherein the first inference solution set comprises at least one inference solution and at least one of confidence or a risk value corresponding to each inference solution, each inference solution is for accomplishing the inference task, the confidence indicates a probability of accomplishing the inference task by using the inference solution, and the risk value indicates a probability of changing user experience when the inference task is accomplished by using the inference solution; and
sending a second inference solution set, wherein the second inference solution set comprises at least one solution in the first inference solution set.

2. The method according to claim 1, wherein the sending the second inference solution set comprises:
using the first inference solution set as the second inference solution set; and
sending the second inference solution set.

3. The method according to claim 2, wherein
the inference request further carries a confidence indication and/or a risk indication, the confidence indication is for requesting to provide confidence corresponding to an inference solution, and the risk indication is for requesting to provide a risk value corresponding to an inference solution.

4. The method according to claim 1, wherein the sending the second inference solution set comprises:
selecting, from the first inference solution set, a solution whose confidence is greater than a confidence threshold and/or a solution whose risk value is greater than a risk threshold, to obtain the second inference solution set; and
sending the second inference solution set.

5. The method according to claim 4, wherein
the inference request further carries the confidence threshold and/or the risk threshold.

6. The method according to claim 1, wherein the sending the second inference solution set comprises:
selecting, from the first inference solution set, one inference solution as a solution in the second inference solution set based on at least one of the confidence or the risk value corresponding to each inference solution; and
sending the second inference solution set.

7. The method according to claim 6, wherein the selecting, from the first inference solution set, one inference solution based on at least one of the confidence or the risk value corresponding to each inference solution comprises:
selecting, from the first inference solution set, one inference solution that satisfies a selecting condition, wherein the selecting condition comprises at least one of the following: an inference solution having highest confidence, an inference solution having a lowest risk value, or an inference solution having a highest fusion value obtained by fusing confidence and a risk value.

8. The method according to claim 7, wherein
the inference request further carries a policy indication, and the policy indication indicates at least one item in the selecting condition.

9. The method according to any one of claims 4 to 8, wherein the second inference solution set further comprises at least one of confidence or a risk value corresponding to an inference solution.

10. The method according to any one of claims 1 to 9, wherein the obtaining the first inference solution set based on the inference request comprises:
obtaining monitoring data and a knowledge base that correspond to the inference task, wherein the monitoring data comprises data of a device related to the inference task, and knowledge in the knowledge base comprises a rule for accomplishing the inference task; and
obtaining the first inference solution set based on the monitoring data and the knowledge.

11. The method according to claim 10, wherein the method further comprises:
obtaining an execution result, wherein the execution result is obtained by executing an inference solution comprised in the second inference solution set; and
updating the knowledge based on the execution result to obtain updated knowledge.

12. The method according to any one of claims 1 to 11, wherein
the inference task comprises at least one of a fault locating task, a fault repair task, a configuration check task, a potential risk identification task, or a solution recommendation task, the fault locating task indicates to locate a fault root cause of a device, the fault repair task indicates to repair a device on which a fault occurs, the configuration check task indicates to check a configuration of a device, the potential risk identification task indicates to obtain a probability that a fault occurs on a device, and the solution recommendation task indicates to obtain at least one solution for executing a target task.

13. An inference method, comprising:
sending an inference request, wherein the inference request is for requesting to provide a solution for accomplishing an inference task, and the inference task comprises a task for fulfilling a user intent target; and
receiving a second inference solution set, wherein the second inference solution set comprises at least one inference solution, the second inference solution set is obtained from a first inference solution set, the first inference solution set is a set generated based on the inference request, the first inference solution set comprises at least one inference solution and at least one of confidence or a risk value corresponding to each inference solution, each inference solution is for accomplishing the inference task, the confidence indicates a probability of accomplishing the inference task by using the inference solution, and the risk value indicates a probability of changing user experience when the inference task is accomplished by using the inference solution.

14. The method according to claim 13, wherein the second inference solution set further comprises at least one of confidence or a risk value corresponding to each of the at least one inference solution.

15. The method according to claim 14, wherein the inference request further carries a confidence indication and/or a risk indication, the confidence indication is for requesting to provide confidence corresponding to an inference solution, and the risk indication is for requesting to provide a risk value corresponding to an inference solution.

16. The method according to claim 13, wherein the confidence of the inference solution comprised in the second inference solution set is higher than a confidence threshold and/or the risk value of the inference solution comprised in the second inference solution set is higher than a risk threshold.

17. The method according to claim 16, wherein the inference request further carries the confidence threshold and/or the risk threshold.

18. The method according to claim 13, wherein the second inference solution set comprises one inference solution, and the one inference solution is obtained by performing selection from the first inference solution set based on the confidence and/or the risk value.

19. The method according to claim 18, wherein the inference request further carries a policy indication, and the policy indication indicates to provide one inference solution.

20. The method according to claim 19, wherein the policy indication further indicates at least one item in a selecting condition, and the selecting condition comprises at least one of the following: an inference solution having highest confidence, an inference solution having a lowest risk value, or an inference solution having a highest fusion value obtained by fusing confidence and a risk value.

21. The method according to any one of claims 13 to 20, wherein the method further comprises:
sending the inference solution in the second inference solution set;
receiving an execution result, wherein the execution result is an execution result obtained by accomplishing the inference task by using the inference solution in the second inference solution set; and
sending the execution result, wherein the execution result is for updating knowledge, the knowledge is for determining the second inference solution set, and the knowledge comprises a rule for accomplishing the inference task.

22. An inference method, comprising:
sending, by a first device, an inference request to a second device, wherein the inference request is for requesting to provide a solution for accomplishing an inference task, and the inference task comprises a task for fulfilling a user intent target;
obtaining, by the second device, a first inference solution set based on the inference request, wherein the first inference solution set comprises at least one inference solution and at least one of confidence or a risk value corresponding to each inference solution, each inference solution is for accomplishing the inference task, the confidence indicates a probability of accomplishing the inference task by using the inference solution, and the risk value indicates a probability of changing user experience when the inference task is accomplished by using the inference solution; and
sending, by the second device, a second inference solution set to the first device, wherein the second inference solution set comprises at least one solution in the first inference solution set.

23. The method according to claim 22, wherein the sending, by the second device, the second inference solution set to the first device comprises:
using, by the second device, the first inference solution set as the second inference solution set; and
sending, by the second device, the second inference solution set to the first device.

24. The method according to claim 22, wherein the sending, by the second device, the second inference solution set to the first device comprises:
selecting, by the second device from the first inference solution set, a solution whose confidence is greater than a confidence threshold and/or a solution whose risk value is greater than a risk threshold, to obtain the second inference solution set; and
sending, by the second device, the second inference solution set to the first device.

25. The method according to claim 22, wherein the sending, by the second device, the second inference solution set to the first device comprises:
selecting, by the second device from the first inference solution set, one inference solution as a solution in the second inference solution set based on at least one of the confidence or the risk value corresponding to each inference solution; and
sending, by the second device, the second inference solution set to the first device.

26. An inference apparatus, comprising:
a transceiver module, configured to perform a step of data receiving or data sending according to any one of claims 1 to 12; and
a processing module, configured to perform a step of data processing according to any one of claims 1 to 12.

27. An inference apparatus, comprising:
a transceiver module, configured to perform a step of data receiving or data sending according to any one of claims 13 to 21; and
a processing module, configured to perform a step of data processing according to any one of claims 13 to 21.

28. A communication system, wherein the system comprises a first device and a second device;
the second device is configured to perform the method according to any one of claims 13 to 21; and
the first device is configured to perform the method according to any one of claims 1 to 12.

29. An inference apparatus, comprising:
a memory, storing executable program instructions; and
a processor, wherein the processor is configured to: be coupled to the memory, read and execute the instructions in the memory, and trigger the inference apparatus to implement the method according to any one of claims 1 to 12 or claims 13 to 21.

30. A computer-readable storage medium, comprising instructions, wherein when the instructions are run on a computer, the computer is caused to perform the method according to any one of claims 1 to 12, or perform the method according to any one of claims 13 to 21.
